# EUROPÄISCHE PATENTSCHRIFT

(11) **EP 4 385 934 B1**
(45) Veröffentlichungstag und Bekanntmachung des Hinweises auf die Patenterteilung: **23.09.2026**
(21) Anmeldenummer: 23212878.5
(22) Anmeldetag: 29.11.2023
(51) Int. Cl.: G05D 1/49, B66F 7/06, B66F 7/28, B66F 9/06, B66F 9/075

(54) **FLURFÖRDERZEUG**
INDUSTRIAL TRUCK
CHARIOT DE MANUTENTION

(30) Priorität: 13.12.2022 DE 102022133111
(43) Veröffentlichungstag der Anmeldung: 19.06.2024
(73) Patentinhaber: Linde Material Handling GmbH, 63743 Aschaffenburg (DE)
(72) Erfinder: BODIN, Lucien, 86100 Châtellerault (FR)
(74) Vertreter: Patentship Patentanwaltgesellschaft

(56) Entgegenhaltungen:
- CN-A- 111 153 345
- CN-A- 115 215 250
- DE-A1- 102020 108 116
- US-B2- 9 707 879

## Beschreibung

Die Erfindung betrifft ein Flurförderzeug mit einem Fahrzeugchassis und einem Lastaufnahmemittel, wobei das Lastaufnahmemittel mittels einer Hubvorrichtung relativ zum Fahrzeugchassis anhebbar und absenkbar ist, wobei die Hubvorrichtung ausgebildet ist, eine Hubbewegung des Lastaufnahmemittels in Richtung einer Fahrzeughochachse und eine Neigebewegung des Lastaufnahmemittels um eine Fahrzeugquerachse und/oder um eine Fahrzeuglängsachse zu erzeugen, wobei das Lastaufnahmemittel mittels einer Führungseinrichtung an dem Fahrzeugchassis in Richtung der Fahrzeughochachse verschiebbar angeordnet ist, wobei die Führungseinrichtung ausgebildet ist, Längsbewegungen des Lastaufnahmemittels entlang der Fahrzeughochachse und Neigebewegungen des Lastaufnahmemittels um die Fahrzeugquerachse und/oder um die Fahrzeuglängsachse zu ermöglichen sowie eine Verdrehbewegung des Lastaufnahmemittels um die Fahrzeughochachse sowie Verschiebebewegungen des Lastaufnahmemittels in Richtung der Fahrzeugquerachse und in Richtung der Fahrzeuglängsachse zu verhindern, wobei die Hubvorrichtung vier Hubhebel aufweist, die in Eckbereichen des Lastaufnahmemittels angeordnet sind, wobei die Hubhebel jeweils schwenkbar an dem Fahrzeugchassis angeordnet sind und jeweils mittels eines Abstützelements mit dem Lastaufnahmemittel in Wirkverbindung stehen.

Flurförderzeuge mit einem Fahrzeugchassis und einem Lastaufnahmemittel können als automatisiertes oder autonomes Transportfahrzeug, das auch als ATV bezeichnet wird, mit einem als Lastaufnahmeplattform ausgebildeten Lastaufnahmemittel ausgebildet sein. Mit derartigen Transportfahrzeugen können im innerbetrieblichen Transport auf dem Lastaufnahmemittel befindliche Lasten transportiert werden. Hierbei sind Bauformen von Transportfahrzeugen bekannt, bei denen das Lastaufnahmemittel mittels einer Hubvorrichtung relativ zum Fahrzeugchassis anhebbar und absenkbar ist, wobei die Hubvorrichtung ausgebildet ist, eine Hubbewegung des Lastaufnahmemittels in Richtung einer Fahrzeughochachse zu erzielen. Das Transportfahrzeug kann hierdurch eine abgestellte Last mit dem Lastaufnahmemittel unterfahren und anschließend das Lastaufnahmemittel anheben, um die Last an einem Aufnahmeort aufzunehmen. Durch Absenken des Lastaufnahmemittels kann die Last an einem Zielort abgestellt werden und das Transportfahrzeug aus der abgestellten Last herausfahren. Ein automatisiertes oder autonomes Transportfahrzeug mit einem als Plattform ausgebildeten Lastaufnahmemittel, bei dem das Lastaufnahmemittel mittels einer Hubvorrichtung relativ zum Fahrzeugchassis anhebbar und absenkbar ist, wobei die Hubvorrichtung ausgebildet ist, eine Hubbewegung des Lastaufnahmemittels in Richtung einer Fahrzeughochachse zu erzielen, ist aus der EP 3 845 482 A1 bekannt.

Auf dem Transportweg zwischen Aufnahmeort und Zielort einer Last können von dem automatisierten oder autonomen Transportfahrzeug geneigte Rampen zu befahren sein. Um bei der Fahrt auf einer geneigten Rampe das Lastaufnahmemittel mit der darauf befindlichen Last in einer horizontalen Ebene halten zu können, ist bereits aus der GB 2 586 005 A ein automatisiertes oder autonomes Transportfahrzeug bekannt, bei dem das Lastaufnahmemittel mittels einer Hubvorrichtung relativ zum Fahrzeugchassis anhebbar und absenkbar ist, wobei die Hubvorrichtung ausgebildet ist, eine Hubbewegung des Lastaufnahmemittels in Richtung einer Fahrzeughochachse und eine Neigebewegung des Lastaufnahmemittels um eine Fahrzeugquerachse zu erzeugen. Die Hubvorrichtung des aus der GB 2 586 005 A bekannten Transportfahrzeugs weist mehrere Scherenhubvorrichtungen auf, die jeweils mittels eines Aktuators betätigbar sind. Eine derartige Hubvorrichtung weist jedoch einen hohen Bauaufwand auf und benötigt einen hohen Bauraumbedarf.

Ein Flurförderzeug mit den Merkmalen des Oberbegriffs des Patentanspruchs 1 ist aus der DE 10 2020 108 116 A1 bekannt.

Der vorliegenden Erfindung liegt die Aufgabe zugrunde, ein Flurförderzeug der eingangs genannten Gattung zur Verfügung zu stellen, das die oben genannten Nachteile teilweise oder vollständig vermeidet.

Diese Aufgabe wird erfindungsgemäß dadurch gelöst, dass die Führungseinrichtung eine in Richtung der Fahrzeughochachse angeordnete Führung, insbesondere ein Führungsrohr, aufweist, die am Fahrzeugchassis befestigt ist, und einen an der Führung längsverschiebbar und verdrehgesichert geführten Schlitten, insbesondere ein Schieberohr, aufweist, wobei der Schlitten mittels eines Ausgleichsgelenks mit dem Lastaufnahmemittel in Wirkverbindung steht, wobei das Ausgleichsgelenk ausgebildet ist, die Neigebewegungen des Lastaufnahmemittels um die Fahrzeugquerachse und/oder um die Fahrzeuglängsachse zu ermöglichen.

Erfindungsgemäß ist somit das Lastaufnahmemittel mittels der Führungseinrichtung an dem Fahrzeugchassis in Richtung der Fahrzeughochachse verschiebbar angeordnet. Mit der Führungseinrichtung werden Längsbewegungen des Lastaufnahmemittels entlang der Fahrzeughochachse und Neigebewegungen des Lastaufnahmemittels um die Fahrzeugquerachse und/oder um die Fahrzeuglängsachse zugelassen und das Lastaufnahmemittel gegen eine Verdrehbewegung um die Fahrzeughochachse sowie Verschiebebewegungen in Richtung der Fahrzeugquerachse und in Richtung der Fahrzeuglängsachse gesichert. Die Führungseinrichtung stellt somit eine Führung dar, die eine Heben-/Senkenwegung der Lastaufnahmeplattform in Richtung der Fahrzeughochachse ermöglicht und die Lastaufnahmeplattform gegen eine Verdrehbewegung um die Fahrzeughochachse sowie Verschiebebewegungen in Richtung der Fahrzeugquerachse und in Richtung der Fahrzeuglängsachse sichert. Darüber hinaus ermöglicht die Führungseinrichtung Neigebewegungen des Lastaufnahmemittels um die Fahrzeugquerachse und/oder um die Fahrzeuglängsachse, so dass das Lastaufnahmemittel in einer Ebene oder zwei Ebenen geneigt werden kann. Die Führungseinrichtung ist bevorzugt - in Draufsicht auf das Lastaufnahmemittel - in einem Zentralbereich des Lastaufnahmemittels angeordnet. Erfindungsgemäß besteht die Hubvorrichtung aus vier Hubhebeln, die in den vier Eckbereichen des Lastaufnahmemittels angeordnet sind. Bevorzugt ist in jedem der vier Eckbereiche des Lastaufnahmemittels jeweils ein Hubhebel angeordnet. Die Hubhebel sind jeweils um eine Schwenkachse an dem Fahrzeugchassis verschwenkbar angeordnet und stehen jeweils mittels eines Abstützelements, beispielsweise einer Rolle, mit dem Lastaufnahmemittel in Wirkverbindung. Durch entsprechendes Verschwenken der vier Hubhebel um die entsprechende Schwenkachse kann bei einer synchronen Schwenkbewegung der vier Hubhebel in einfacher Weise eine Heben- und Senkbewegung des Lastaufnahmemittels erzeugt werden sowie bei einer nicht-synchronen Schwenkbewegung der vier Hubhebel in einfacher Weise eine Neigebewegung des Lastaufnahmemittels um die Fahrzeugquerachse und/oder um die Fahrzeuglängsachse erzeugt werden. Die vier Hubhebel stellen somit den Hubantrieb und den Neigeantrieb der Lastaufnahmeplattform dar. Die Führungseinrichtung sowie die vier Hubhebel weisen hierbei einen einfachen Aufbau mit einem geringen Bauraumbedarf auf. Mit einem an dem entsprechenden Hubhebel angeordneten Abstützelement, beispielsweise einer an dem Hubhebel drehbar angeordneten Rolle, mit dem sich das Lastaufnahmemittel an dem entsprechenden Hubhebel abstützt, kann in einfacher Weise eine Relativbewegung zwischen dem am Fahrzeugchassis angeordneten Hubhebel und dem Lastaufnahmemittel bei einer Neigebewegung des Lastaufnahmemittels um die Fahrzeugquerachse und/oder um die Fahrzeuglängsachse ermöglicht werden, wodurch die Lastaufnahmeplattform leichtgängig um die Fahrzeugquerachse und/oder um die Fahrzeuglängsachse geneigt werden kann.

Mit einer an dem Fahrzeugchassis in Richtung der Fahrzeughochachse angeordneten und starr befestigten Führung und einem an der Führung längsverschiebbar und verdrehgesichert geführten Schlitten können in einfacher Weise und mit geringem Bauaufwand für die Führungseinrichtung eine Längsbewegungen des Lastaufnahmemittels entlang der Fahrzeughochachse zum Heben und Senken des Lastaufnahmemittels ermöglicht werden sowie eine Verdrehbewegung des Lastaufnahmemittels um die Fahrzeughochachse und Verschiebebewegungen des Lastaufnahmemittels in Richtung der Fahrzeugquerachse und in Richtung der Fahrzeuglängsachse verhindert werden. Erfindungsgemäß ist die Führung von einem Führungsrohr, beispielsweise einem Profilrohr mit einem Rechteckquerschnitt, und der Schlitten von einem Schieberohr, beispielsweise einem Profilrohr mit einem an den Rechteckquerschnitt des Profilrohrs angepassten Rechteckquerschnitt ausgebildet, wobei das Schieberohr an oder in dem Führungsrohr längsverschiebbar ist. Mit dem Ausgleichsgelenk, mit dem der Schlitten mit dem Lastaufnahmemittel in Wirkverbindung steht, können in einfacher Weise die Neigebewegungen des Lastaufnahmemittels um die Fahrzeugquerachse und/oder um die Fahrzeuglängsachse ermöglicht werden.

Gemäß einer vorteilhaften Ausführungsform der Erfindung sind zwei Hubhebel um eine erste Schwenkachse und zwei Hubhebel um eine zweite Schwenkachse schwenkbar am Fahrzeugchassis angeordnet, wobei die erste Schwenkachse und die zweite Schwenkachse parallel zueinander und in Fahrzeuglängsrichtung oder in Fahrzeugquerrichtung beabstandet voneinander angeordnet sind. Zwei der vier Hubhebel können hierbei um eine erste, in Fahrzeugquerrichtung verlaufende Schwenkachse und die anderen zwei der vier Hubhebel um eine zweite, in Fahrzeugquerrichtung verlaufende Schwenkachse schwenkbar angeordnet sein und die beiden Schwenkachsen parallel zueinander und in Fahrzeuglängsrichtung beabstandet voneinander angeordnet sein. Alternativ können zwei der vier Hubhebel um eine erste, in Fahrzeuglängsrichtung verlaufende Schwenkachse und die anderen zwei der vier Hubhebel um eine zweite, in Fahrzeuglängsrichtung verlaufende Schwenkachse schwenkbar angeordnet sein und die beiden Schwenkachsen parallel zueinander und in Fahrzeugquerrichtung beabstandet voneinander angeordnet sein. Mit derartigen Anordnungen der vier Hubhebel können in einfacher Weise mit den vier Hubhebeln die Heben- und Senkbewegung des Lastaufnahmemittels sowie die Neigebewegung des Lastaufnahmemittels um die Fahrzeugquerachse und/oder um die Fahrzeuglängsachse erzeugt werden.

Gemäß einer vorteilhaften Ausgestaltungsform der Erfindung sind die Hubhebel paarweise mittels eines Aktuators, insbesondere eines Linearaktuators, betätigbar. Jeweils zwei Hubhebel sind somit mittels eines Aktuators gemeinsam betätigbar. Bevorzugt sind die zwei Hubhebel, die um die erste Schwenkachse verschwenkbar sind, mittels eines ersten Aktuators und die zwei anderen Hubhebel, die um die zweite Schwenkachse verschwenkbar sind, mittels eine zweiten Aktuators betätigbar. Zur Betätigung der vier Hubhebel sind somit nur zwei Aktuatoren erforderlich. Mit einer derartigen paarweisen Betätigung von jeweils zwei der vier Hubhebel kann in einfacher Weise und bei geringem Bauaufwand und Bauraumbedarf bei in Fahrzeugquerrichtung verlaufenden beiden Schwenkachsen das Lastaufnahmemittel um die Fahrzeugquerachse nach vorne und hinten geneigt werden und bei in Fahrzeuglängsrichtung verlaufenden beiden Schwenkachsen das Lastaufnahmemittel um die Fahrzeuglängsachse nach rechts und links geneigt werden.

Gemäß einer vorteilhaften Ausgestaltungsform der Erfindung sind zwei Hubhebel mittels einer Koppelwelle verbunden und mittels eines Aktuators betätigbar, wobei zwei Koppelwellen vorgesehen sind, die jeweils zwei Hubhebel aufweisen und jeweils mittels eines Aktuators betätigbar sind. Jede der beiden Koppelwellen verbindet somit zwei Hubhebel mechanisch miteinander und ist mit jeweils einem Aktuator zur Betätigung der Koppelwelle und somit der an der entsprechenden Koppelwelle angeordneten zwei Hubhebel mechanisch verbunden.

Gemäß einer vorteilhaften Ausgestaltungsform der Erfindung ist die erste Koppelwelle um die erste Schwenkachse und die zweite Koppelwelle um die zweite Schwenkachse am Fahrzeugchassis verschwenkbar angeordnet. Mit einer derartigen Anordnung von zwei Koppelwellen, die jeweils mit zwei Hubhebeln versehen sind, kann in einfacher Weise und bei geringem Bauaufwand und Bauraumbedarf bei in Fahrzeugquerrichtung verlaufenden beiden Schwenkachsen das Lastaufnahmemittel um die Fahrzeugquerachse nach vorne und hinten geneigt werden und bei in Fahrzeuglängsrichtung verlaufenden beiden Schwenkachsen das Lastaufnahmemittel um die Fahrzeuglängsachse nach rechts und links geneigt werden.

Gemäß einer vorteilhaften Ausgestaltungsform der Erfindung stehen die vier Hubhebel jeweils mittels eines als Zylinderrolle ausgebildeten Abstützelements mit dem Lastaufnahmemittel in Wirkverbindung. Die Zylinderrollen sind bevorzugt an dem entsprechenden Hubhebel drehbar angeordnet. Bei einer paarweisen Betätigung von jeweils zwei der vier Hubhebel mittels eines Aktuators, wobei je nach Ausrichtung der beiden Schwenkachsen das Lastaufnahmemittel entweder um die Fahrzeugquerachse nach vorne und hinten geneigt werden kann oder um die Fahrzeuglängsachse nach rechts und links geneigt werden kann, können die Abstützelemente, mit denen die Hubhebel mit dem Lastaufnahmemittel in Kontakt stehen, als einfach aufgebaute Zylinderrollen, die ebene Laufflächen aufweisen, ausgebildet sein.

Gemäß einer alternativen und ebenfalls vorteilhaften Ausgestaltungsform der Erfindung ist jeder Hubhebel mittels eines Aktuators, insbesondere eines Linearaktuators, einzeln betätigbar. Jeder der vier Hubhebel ist somit mittels eines Aktuators einzeln betätigbar. Zur Betätigung der vier Hubhebel sind somit vier Aktuatoren erforderlich. Mit einer derartigen einzelnen Betätigung der vier Hubhebel kann in einfacher Weise und bei geringem Bauaufwand und Bauraumbedarf das Lastaufnahmemittel sowohl um die Fahrzeugquerachse nach vorne und hinten geneigt werden als auch um die Fahrzeuglängsachse nach rechts und links geneigt werden.

Gemäß einer vorteilhaften Ausgestaltungsform der Erfindung stehen die Hubhebel jeweils mittels eines als Kugelrolle ausgebildeten Abstützelements mit dem Lastaufnahmemittel in Wirkverbindung. Die Zylinderrollen sind bevorzugt an dem entsprechenden Hubhebel drehbar angeordnet. Bei einer einzelnen Betätigung der vier Hubhebel mittels jeweils eines Aktuators, wobei das Lastaufnahmemittel sowohl um die Fahrzeugquerachse nach vorne und hinten geneigt werden kann als auch um die Fahrzeuglängsachse nach rechts und links geneigt werden kann, können die Abstützelemente, mit denen die Hubhebel mit dem Lastaufnahmemittel in Kontakt stehen, als einfach aufgebaute Kugelrollen, die sphärische Laufflächen aufweisen, ausgebildet sein.

Gemäß einer vorteilhaften Ausgestaltungsform der Erfindung ist jedes Abstützelement in einer langlochartigen Ausnehmung des Lastaufnahmemittels geführt. Bei einer Schwenkbewegung des entsprechenden Hubhebels kann somit das an dem Hubhebel ausgebildete Abstützelement in einfacher Weise Kräfte auf das Lastaufnahmemittel übertragen, um die gewünschte Bewegung des Lastaufnahmemittels durchzuführen.

Gemäß einer vorteilhaften Ausgestaltungsform der Erfindung ist das Ausgleichsgelenk als Kugelgelenk ausgebildet. Das Kugelgelenk kann eine Kugel, die in einer hohlkugelförmigen Aufnahme angeordnet ist, ausgebildet sein. Die Kugel kann hierbei an dem Schlitten und die hohlkugelförmige Aufnahme an dem Lastaufnahmemittel angeordnet sein. Alternativ kann die hohlkugelförmige Aufnahme an dem Schlitten und die Kugel an dem Lastaufnahmemittel angeordnet sein.

Gemäß einer vorteilhaften Ausgestaltungsform der Erfindung weist das Ausgleichsgelenk ein Gelenkbauteil auf, das an dem Schlitten um die Fahrzeugquerachse neigbar angeordnet ist, und ist das Lastaufnahmemittel an dem Gelenkbauteil um die Fahrzeuglängsachse neigbar angeordnet. Das Ausgleichsgelenk weist somit ein Gelenkbauteil auf, das an dem Schlitten um die Fahrzeugquerachse neigbar angeordnet ist und an dem das Lastaufnahmemittel um die Fahrzeuglängsachse neigbar angeordnet ist. Das Gelenkbauteil weist somit zwei rechtwinklig angeordnete Neigeachsen auf, wodurch mit geringem Bauaufwand Neigebewegungen des Lastaufnahmemittels um die Fahrzeugquerachse und um die Fahrzeuglängsachse erzielt werden können.

Gemäß einer vorteilhaften Ausgestaltungsform der Erfindung ist eine elektronische Steuerungseinrichtung vorgesehen, die ausgebildet ist, die Aktuatoren anzusteuern. Mit einer derartigen Steuerungseinrichtung können die Aktuatoren in einfacher Weise synchron mit demselben Hub der Hubhebel angesteuert werden, um die Heben- und Senkbewegung des Lastaufnahmemittels zu erzeugen, und nicht-synchron mit unterschiedlichem Hub der Hubhebel angesteuert werden, um die Neigebewegung des Lastaufnahmemittels um die Fahrzeugquerachse und/oder um die Fahrzeuglängsachse zu erzeugen.

Gemäß einer vorteilhaften Ausgestaltungsform der Erfindung steht die elektronische Steuerungseinrichtung mit einer die Neigung des Flurförderzeugs oder die Neigung des Lastaufnahmemittels erfassenden Sensoreinrichtung in Verbindung und ist die elektronische Steuerungseinrichtung ausgebildet, die Aktuatoren derart anzusteuern, dass beim Fahren des Flurförderzeugs auf einer geneigten Rampe das Lastaufnahmemittel in einer horizontalen Ebene angeordnet ist. Durch entsprechende Ansteuerung der Aktuatoren kann somit das Lastaufnahmemittel mit einer darauf befindlichen Last beim Befahren einer geneigten Rampe in einer horizontalen Ebene gehalten werden. Dadurch ergibt sich eine verbesserte Stabilität des Flurförderzeugs sowie der transportierten Last und somit eine verbesserte Sicherheit des Flurförderzeugs beim Befahren einer geneigten Rampe. Durch das Neigen des Lastaufnahmemittels und das Halten der auf dem Lastaufnahmemittel befindlichen Last beim Befahren einer geneigten Rampe in einer horizontalen Ebene wird zudem der Schwerpunkt der Last in günstiger Weise derart verschoben, dass Antriebsräder des Flurförderzeugs hohe Antriebskräfte und hohe Bremskräfte übertragen können, so dass das Flurförderzeug bei der Fahrt auf einer geneigten Rampe gute Fahreigenschaften aufweist und die geneigte Rampe mit einer hohen Fahrgeschwindigkeit befahren kann.

Gemäß einer vorteilhaften Ausgestaltungsform der Erfindung ist die elektronische Steuerungseinrichtung derart ausgebildet, dass beim Abbremsen des Flurförderzeugs durch Ansteuerung der Aktuatoren das Lastaufnahmemittel um die Fahrzeugquerachse in eine der Fahrtrichtung entgegengesetzte Richtung geneigt wird. Beim Abbremsen kann somit das Lastaufnahmemittel und die darauf befindliche Last in Fahrtrichtung nach hinten geneigt werden, so dass ein Abrutschen oder Abkippen der Last in Fahrtrichtung nach vorne vermieden werden kann. Das Flurförderzeug kann somit mit einer höheren Bremsverzögerung abgebremst werden, beispielsweise während einer Notabbremsung, und es kann eine hohe Stabilität der aufgenommenen Last beim Abbremsen des Flurförderzeugs erzielt werden. Ein Abbremsen des Flurförderzeugs kann die Steuerungseinrichtung in einfacher Weise ermitteln, wenn die Steuerungseinrichtung einen Fahrantrieb des Flurförderzeugs ansteuert und einen entsprechenden Bremsbefehl an den Fahrantrieb ausgibt oder die Steuerungseinrichtung mit einer den Fahrantrieb des Flurförderzeugs ansteuernden Fahrzeugsteuerung in Verbindung steht.

Gemäß einer vorteilhaften Ausgestaltungsform der Erfindung ist die elektronische Steuerungseinrichtung derart ausgebildet, dass beim Beschleunigen des Flurförderzeugs durch Ansteuerung der Aktuatoren das Lastaufnahmemittel um die Fahrzeugquerachse in eine der Fahrtrichtung zugewandte Richtung geneigt wird. Beim Beschleunigen kann somit das Lastaufnahmemittel und die darauf befindliche Last in Fahrtrichtung nach vorne geneigt werden, so dass ein Abrutschen oder Abkippen der Last in Fahrtrichtung nach hinten vermieden werden kann. Das Flurförderzeug kann somit mit einer höheren Beschleunigung beschleunigt werden und es kann eine hohe Stabilität der aufgenommenen Last beim Beschleunigen des Flurförderzeugs erzielt werden. Ein Beschleunigen des Flurförderzeugs kann die Steuerungseinrichtung in einfacher Weise ermitteln, wenn die Steuerungseinrichtung einen Fahrantrieb des Flurförderzeugs ansteuert und einen entsprechenden Beschleunigungsbefehl an den Fahrantrieb ausgibt oder die Steuerungseinrichtung mit einer den Fahrantrieb des Flurförderzeugs ansteuernden Fahrzeugsteuerung in Verbindung steht.

Gemäß einer vorteilhaften Ausgestaltungsform der Erfindung ist die elektronische Steuerungseinrichtung derart ausgebildet, dass bei einer Kurvenfahrt des Flurförderzeugs durch Ansteuerung der Aktuatoren das Lastaufnahmemittel um die Fahrzeuglängsachse in Richtung des Kurvenmittelpunktes geneigt wird. Bei einer Kurvenfahrt kann somit das Lastaufnahmemittel und die darauf befindliche Last zum Kurvenmittelpunkt nach Innen geneigt werden, so dass ein Abrutschen oder Abkippen der Last nach Außen vermieden werden kann. Das Flurförderzeug kann somit mit einer höheren Fahrgeschwindigkeit eine Kurve durchfahren und es kann eine hohe Stabilität der aufgenommenen Last bei einer Kurvenfahrt des Flurförderzeugs erzielt werden. Eine Kurvenfahrt des Flurförderzeugs kann die Steuerungseinrichtung in einfacher Weise ermitteln, wenn die Steuerungseinrichtung einen Fahrantrieb des Flurförderzeugs ansteuert und einen entsprechenden Kurvenfahrbefehl an den Fahrantrieb ausgibt oder die Steuerungseinrichtung mit einer den Fahrantrieb des Flurförderzeugs ansteuernden Fahrzeugsteuerung in Verbindung steht.

Gemäß einer vorteilhaften Ausgestaltungsform der Erfindung ist das Flurförderzeug als automatisiertes oder autonomes Transportfahrzeug mit einem als Lastaufnahmeplattform ausgebildeten Lastaufnahmemittel ausgebildet. Die Lastaufnahmeplattform steht bevorzugt an dem linken vorderen Eckbereich, an dem rechten vorderen Eckbereich, an dem linken hinteren Eckbereich und an dem rechten hinteren Eckbereich mit jeweils einem Hubhebel in Wirkverbindung.

Gemäß einer alternativen und ebenfalls vorteilhaften Ausgestaltungsform der Erfindung ist das Flurförderzeug als Hubwagen ausgebildet, wobei das Lastaufnahmemittel von zwei an Radarmen angeordneten Hubplatten gebildet ist. Jede der beiden Hubplatten steht hierbei bevorzugt an dem vorderen und hinteren Endbereich mit jeweils einem der vier Hubhebel in Wirkverbindung, so dass an dem von den beiden Hubplatten gebildeten Lastaufnahmemittel an den vier Eckbereichen jeweils ein Hubhebel angeordnet ist.

Die Erfindung weist eine Reihe von Vorteilen auf.

Mit den von den zwei oder vier Aktuatoren betätigten vier Hubhebeln kann die Höhe und die Neigung des Lastaufnahmemittels und der darauf befindlichen Last in einfacher Weise eingestellt werden.

Bei einer Ausführung der Erfindung, bei der jeweils zwei Hubhebel mittels eines Aktuators gemeinsam betätigbar sind, kann das Lastaufnahmemittel in einfacher Weise angehoben und abgesenkt werden sowie das Lastaufnahmemittel in einer Richtung um die Fahrzeugquerachse und/oder um die Fahrzeuglängsachse geneigt werden.

Bei einer Ausführung der Erfindung, bei der die vier Hubhebel jeweils mittels eines Aktuators einzeln betätigbar sind, kann das Lastaufnahmemittel in einfacher Weise angehoben und abgesenkt werden sowie das Lastaufnahmemittel in zwei Richtungen um die Fahrzeugquerachse und um die Fahrzeuglängsachse geneigt werden.

Durch die Einstellung der Neigung des Lastaufnahmemittels und somit der Einstellung der Neigung der auf dem Lastaufnahmemittel befindlichen Last kann der Lastschwerpunkt der Last verändert werden und dadurch der Gesamtschwerpunkt des Flurförderzeugs moduliert werden, so dass eine hohe Traktion des Flurförderzeugs mit hohen Antriebskräften und Bremskräften erzielt werden kann
Durch die Einstellung der Neigung des Lastaufnahmemittels und somit der Einstellung der Neigung der auf dem Lastaufnahmemittel befindlichen Last kann weiterhin die Neigung der aufgenommenen Last auf dem Flurförderzeug eingestellt werden und eine hohe Stabilität der Last gewährleistet werden, unabhängig von einer geneigten Rampe und unabhängig von der Position des Flurförderzeugs auf einer geneigten Rampe.

Durch die Einstellung der Neigung des Lastaufnahmemittels und somit der Einstellung der Neigung der auf dem Lastaufnahmemittel befindlichen Last kann weiterhin die Neigung der aufgenommenen Last auf dem Flurförderzeug derart eingestellt werden, dass bei dynamischen Fahrvorgängen, beispielsweise beim Beschleunigen mit hohen Beschleunigungen und/oder beim Abbremsen mit hohen Bremsverzögerungen, und/oder während einer Kurvenfahrt des Flurförderzeugs, beispielsweise beim Drehen des Flurförderzeugs um die Fahrzeughochachse auf einer Stelle, die Dynamik des Flurförderzeugs (Beschleunigung, Bremsverzögerung, Kurvengeschwindigkeit) und damit die Umschlagsleistung erhöht werden kann und eine hohe Stabilität der aufgenommenen Last erzielt werden kann.

Weitere Vorteile und Einzelheiten der Erfindung werden anhand der in den schematischen Figuren dargestellten Ausführungsbeispiele näher erläutert. Hierbei zeigen
- Figur 1: ein erfindungsgemäßes Flurförderzeug in einer Seitenansicht,
- Figur 2: eine Darstellung einer Führungseinrichtung des erfindungsgemäßen Flurförderzeugs,
- Figur 3: die Führungseinrichtung der Figur 2 in einer Explosionsdarstellung,
- Figuren 4 bis 6: verschiedene Darstellungen der Führungseinrichtung mit dem Lastaufnahmemittel des erfindungsgemäßen Flurförderzeugs,
- Figur 7: eine Darstellung eines Hubhebels mit Aktuator des erfindungsgemäßen Flurförderzeugs in einer Stellung mit abgesenktem Hubhebel,
- Figur 8: eine Darstellung eines Hubhebels mit Aktuator des erfindungsgemäßen Flurförderzeugs in einer Stellung mit angehobenem Hubhebel,
- Figur 9: eine erste konstruktive Ausführungsform eines Hubhebels,
- Figur 10: eine zweite konstruktive Ausführungsform eines Hubhebels,
- Figur 11: eine Seitenansicht eines erfindungsgemäßen Flurförderzeugs während einer Fahrt auf einer geneigten Rampe ohne Einsatz der Hubvorrichtung,
- Figur 12: eine Seitenansicht eines erfindungsgemäßen Flurförderzeugs während einer Fahrt auf einer geneigten Rampe mit Einsatz der Hubvorrichtung,
- Figur 13: eine perspektivische Ansicht eines erfindungsgemäßen Flurförderzeugs,
- Figur 14: das Flurförderzeug der Figur 13 mit aufgenommener und abgesenkter Last,
- Figur 15: das Flurförderzeug der Figur 13 mit aufgenommener und angehobener Last,
- Figuren 16 und 17: das Flurförderzeug der Figur 13 in verschiedenen Neigestellungen des Lastaufnahmemittels,
- Figur 18: das Flurförderzeug der Figur 13 während einer Fahrt auf einer geneigten Rampe mit Einsatz der Hubvorrichtung,
- Figur 19: eine Seitenansicht eines erfindungsgemäßen Flurförderzeugs während des Abbremsens ohne Einsatz und mit Einsatz der Hubvorrichtung,
- Figur 20: eine Seitenansicht eines erfindungsgemäßen Flurförderzeugs während des Beschleunigens ohne Einsatz und mit Einsatz der Hubvorrichtung,
- Figur 21: eine Rückansicht eines erfindungsgemäßen Flurförderzeugs während der Kurvenfahrt ohne Einsatz und mit Einsatz der Hubvorrichtung und
- Figur 22: einen schematischen Schaltplan des erfindungsgemäßen Flurförderzeugs.

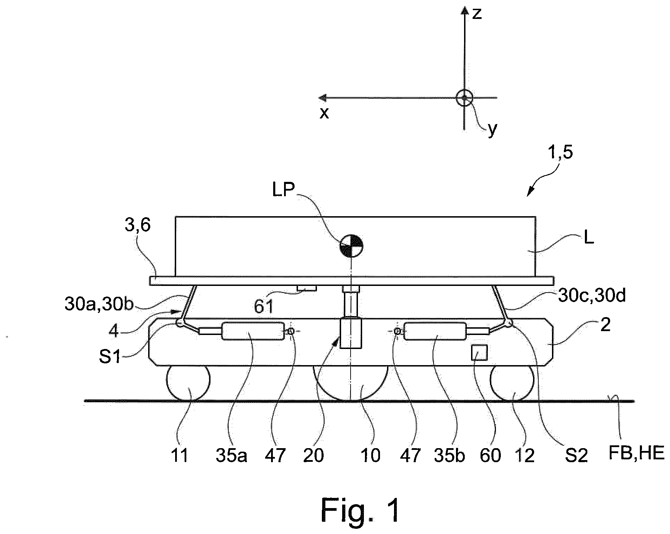

In der Figur 1 ist ein erfindungsgemäßes Flurförderzeug 1 in einer Seitenansicht dargestellt.

Das Flurförderzeug 1 weist ein Fahrzeugchassis 2 und ein Lastaufnahmemittel 3 auf, das mittels einer Hubvorrichtung 4 relativ zum Fahrzeugchassis 2 anhebbar und absenkbar ist. Die Hubvorrichtung 4 ist - wie im Folgenden eingehend beschrieben wird - ausgebildet, eine Hubbewegung des Lastaufnahmemittels 2 in Richtung einer Fahrzeughochachse z und eine Neigebewegung des Lastaufnahmemittels 2 um eine Fahrzeugquerachse y und/oder um eine Fahrzeuglängsachse x zu erzeugen.

Im dargestellten Ausführungsbeispiel ist das Flurförderzeug 1 als automatisiertes oder autonomes Transportfahrzeug 5 mit einem als Lastaufnahmeplattform 6 ausgebildeten Lastaufnahmemittel 3 ausgebildet. Das Fahrzeugchassis 2 befindet sich unterhalb der Lastaufnahmeplattform 6, so dass mit dem Transportfahrzeug 5 eine Last L unterfahren und durch Anheben der Lastaufnahmeplattform 6 aufgenommen werden kann.

Das Fahrzeugchassis 2 stützt sich mittels Antriebsrädern 10 und lenkbaren Räder 11, 12, die beispielsweise als Nachlaufrollen ausgebildet sind, auf einer Fahrbahn FB ab. Im dargestellten Ausführungsbeispiel sind die Antriebsräder 10 in Fahrzeuglängsrichtung mittig angeordnet und es befinden sich im vorderen Bereich und im hinteren Bereich des Fahrzeugchassis 2 jeweils mindestens ein lenkbares Rad 11, 12. Bevorzugt sind zwei Antriebsräder 10 vorgesehen, die in Fahrzeugquerrichtung beabstandet angeordnet sind, so dass durch unterschiedliche Drehzahlen an den Antriebsrädern 10 eine Kurvenfahrt des Flurförderzeugs 1 erzielt werden kann.

Das Lastaufnahmemittel 3 ist mittels einer Führungseinrichtung 20 an dem Fahrzeugchassis 2 in Richtung der Fahrzeughochachse z verschiebbar angeordnet. Die Führungseinrichtung 20 ist - wie im Folgenden noch beschrieben wird - ausgebildet, Längsbewegungen des Lastaufnahmemittels 3 entlang der Fahrzeughochachse z und Neigebewegungen des Lastaufnahmemittels 3 um die Fahrzeugquerachse y und/oder um die Fahrzeuglängsachse x zu ermöglichen sowie eine Verdrehbewegung des Lastaufnahmemittels 3 um die Fahrzeughochachse z sowie Verschiebebewegungen des Lastaufnahmemittels 3 in Richtung der Fahrzeugquerachse y und in Richtung der Fahrzeuglängsachse x zu verhindern.

Die Hubvorrichtung 4 des erfindungsgemäßen Flurförderzeugs 1 besteht aus vier Hubhebel 30a, 30b, 30c, 30d, die in den vier Eckbereichen des Lastaufnahmemittels 3 angeordnet sind. In jedem der vier Eckbereiche des Lastaufnahmemittels 3 ist bevorzugt jeweils ein Hubhebel 30a, 30b, 30c, 30d angeordnet.

Die Hubhebel 30a, 30b, 30c, 30d sind jeweils schwenkbar an dem Fahrzeugchassis 2 angeordnet.

Die zwei Hubhebel 30a, 30b sind um eine erste Schwenkachse S1 und die zwei Hubhebel 30c, 30d um eine zweite Schwenkachse S2 schwenkbar am Fahrzeugchassis 2 angeordnet. Die erste Schwenkachse S1 und die zweite Schwenkachse S2 sind parallel zueinander angeordnet. In dem Ausführungsbeispiel der Figur 1 verlaufen die Schwenkachsen S1, S2 jeweils in Fahrzeugquerrichtung und sind in Fahrzeuglängsrichtung beabstandet voneinander angeordnet. Die beiden Hubhebel 30a, 30b sind bevorzugt in Fahrzeugquerrichtung beabstandet an der Schwenkachse S1 angeordnet. Die beiden Hubhebel 30c, 30d sind bevorzugt in Fahrzeugquerrichtung beabstandet an der Schwenkachse S2 angeordnet.

Gemäß einer ersten Ausführungsform der Erfindung, die in der Figur 1 dargestellt ist, sind die vier Hubhebel 30a, 30b, 30c, 30d paarweise mittels eines Aktuators 35a, 35b, beispielweise eines Linearaktuators, betätigbar. In dem Ausführungsbeispiel der Figur 1 sind die beiden Hubhebel 30a, 30b, die um die erste Schwenkachse S1 schwenkbar am Fahrzeugchassis 2 angeordnet sind, mittels des Aktuators 35a betätigbar und die beiden Hubhebel 30c, 30d, die um die zweite Schwenkachse S2 schwenkbar am Fahrzeugchassis 2 angeordnet sind, mittels des Aktuators 35b betätigbar.

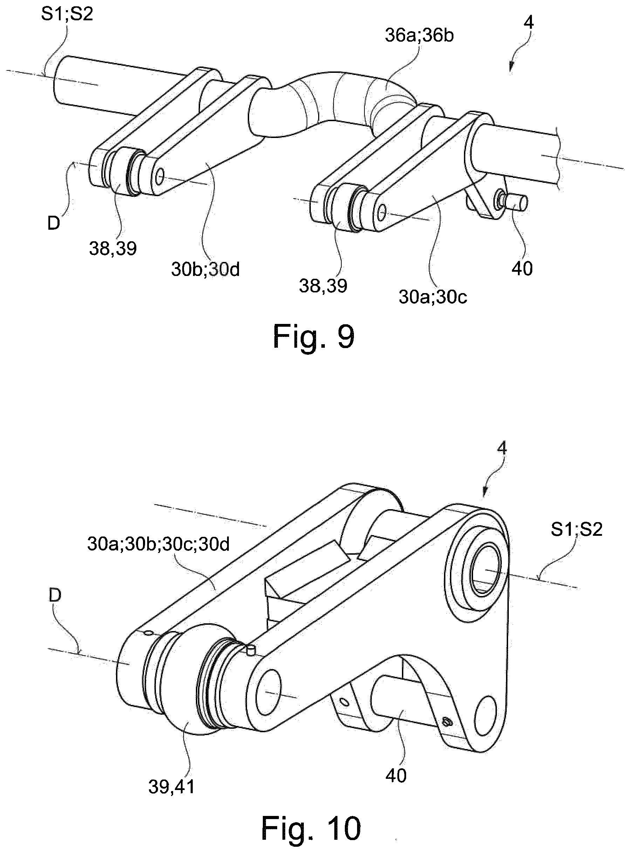

Die beiden Hubhebel 30a, 30b bzw. die beiden Hubhebel 30c, 30d sind bevorzugt - wie in der Figur 9 dargestellt ist, in der ein Ausschnitt der Hubvorrichtung 4 der Figur 1 näher dargestellt ist - mittels einer Koppelwelle 36a bzw. 36b miteinander mechanisch verbunden. Die Koppelwelle 36a bzw. 36b ist mittels des Aktuators 35a bzw. 35b betätigbar. In dem Ausführungsbeispiel der Figur 1 sind somit zwei Koppelwellen 36a, 36b vorgesehen, wobei die erste Koppelwelle 36a mit den zwei Hubhebeln 30a, 30b versehen ist, und mittels des Aktuators 35a betätigbar ist sowie die zweite Koppelwelle 36b mit den zwei Hubhebeln 30c, 30d versehen ist und mittels des Aktuators 35b betätigbar ist.

Die erste Koppelwelle 36a ist hierbei um die erste Schwenkachse S1 am Fahrzeugchassis 2 verschwenkbar angeordnet und kann mittels des Aktuators 35a um die erste Schwenkachse S1 verschwenkt werden. Die zweite Koppelwelle 36b ist um die zweite Schwenkachse S2 am Fahrzeugchassis 2 verschwenkbar angeordnet und kann mittels des Aktuators 35b um die zweite Schwenkachse S2 verschwenkt werden.

Jeder der vier Hubhebel 30a, 30b, 30c, 30d steht bevorzugt mittels eines als Zylinderrolle 38 ausgebildeten Abstützelements 39 mit dem Lastaufnahmemittel 3 in Wirkverbindung. Die Zylinderrollen 38 sind an dem entsprechenden Hubhebel 30a, 30b, 30c, 30d um eine Drehachse D drehbar angeordnet, die parallel zur Schwenkachse S1 bzw. S2 verläuft.

In dem dargestellten Ausführungsbeispiel ist zumindest einer der beiden an der Koppelwelle 36a bzw. 36b angeordneten Hebel 30a, 30b bzw. 30c, 30d als zweiarmiger Hebel ausgebildet, wobei an einem ersten Hebelarm das Abstützelement 39 angeordnet ist und an einem zweiten Hebelarm eine Koppelstelle 40 ausgebildet ist, an der der Aktuator 35a bzw. 35b gelenkig angelenkt ist.

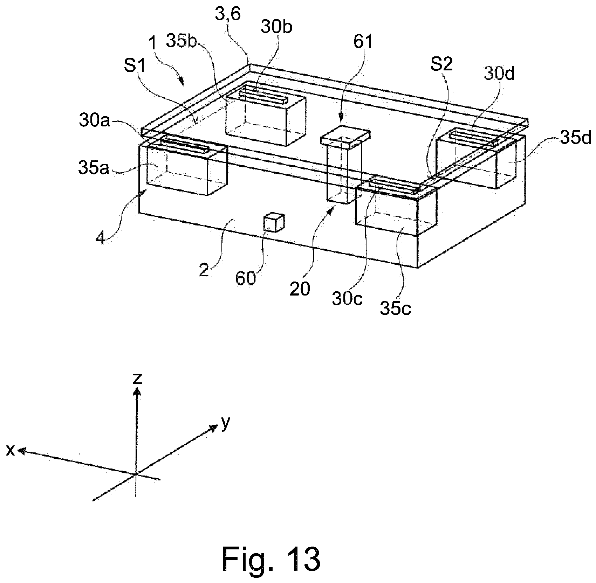

Gemäß einer zweiten Ausführungsform der Erfindung, die in der Figur 13 dargestellt ist, sind die vier Hubhebel 30a, 30b, 30c, 30d jeweils einzeln und somit individuell mittels eines Aktuators 35a, 35b, 35c, 35d, beispielweise eines Linearaktuators, betätigbar. In der Figur 13 sind mit der Figur 1 übereinstimmende Bauteile mit denselben Bezugsziffern versehen. In dem Ausführungsbeispiel der Figur 13 ist der Hubhebel 30a mittels des Aktuators 35a um die erste Schwenkachse S1 betätigbar, der Hubhebel 30b mittels des Aktuators 35b um die erste Schwenkachse S1 betätigbar, der Hubhebel 30c mittels des Aktuators 35c um die zweite Schwenkachse S2 betätigbar und der Hubhebel 30d mittels des Aktuators 35d um die zweite Schwenkachse S2 betätigbar.

In dem Ausführungsbeispiel der Figur 13 verlaufen die Schwenkachsen S1, S2 jeweils in Fahrzeugquerrichtung und sind in Fahrzeuglängsrichtung beabstandet voneinander angeordnet. Die beiden Hubhebel 30a, 30b sind bevorzugt in Fahrzeugquerrichtung beabstandet an der Schwenkachse S1 angeordnet. Die beiden Hubhebel 30c, 30d sind bevorzugt in Fahrzeugquerrichtung beabstandet an der Schwenkachse S2 angeordnet.

Jeder der vier Hubhebel 30a, 30b, 30c, 30d steht bevorzugt - wie in der Figur 10 dargestellt ist, in der ein Ausschnitt der Hubvorrichtung 4 der Figur 13 näher dargestellt ist - mittels eines als Kugelrolle 41 ausgebildeten Abstützelements 39 mit dem Lastaufnahmemittel 3 in Wirkverbindung. Die Kugelrollen 41 sind an dem entsprechenden Hubhebel 30a, 30b, 30c, 30d um eine Drehachse D drehbar angeordnet, die parallel zur Schwenkachse S1 bzw. S2 verläuft.

Wie aus der Figur 10 ersichtlich ist, ist jeder der vier Hubhebel 30a, 30b, 30c, 30d als zweiarmiger Hebel ausgebildet, wobei an einem ersten Hebelarm das Abstützelement 39 angeordnet ist und an einem zweiten Hebelarm eine Koppelstelle 40 ausgebildet ist, an der der den entsprechenden Hubhebel 30a, 30b, 30c, 30d betätigende Aktuator 35a, 35b, 35c, 35d gelenkig angelenkt ist.

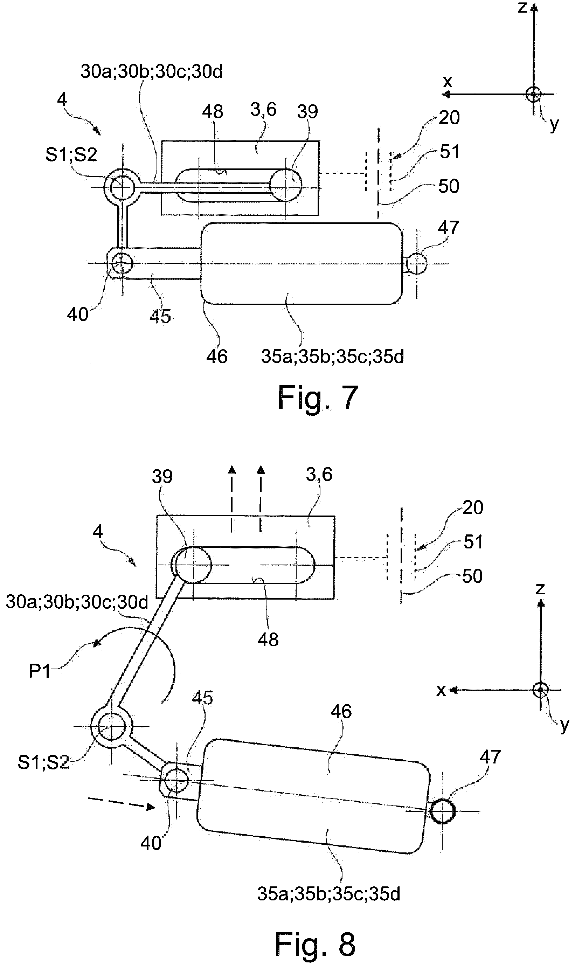

In den Figuren 7, 8 ist einer der vier Hubhebel 30a, 30b, 30c, 30d und ein den Hubhebel 30a, 30b, 30c, 35d betätigender Aktuator 35a, 35b, 35c, 35d des Hubsystems 4 des erfindungsgemäßen Flurförderzeugs 1 der Figur 1 bzw. der Figur 13 in einer schematischen Darstellung dargestellt. In den Figuren 7, 8 ist weiterhin die Führungseinrichtung 20 schematisch dargestellt, mittels der das Lastaufnahmemittel 3 an dem Fahrzeugchassis 2 in Richtung der Fahrzeughochachse z verschiebbar angeordnet ist.

Der als Linearaktuator ausgebildete Aktuator 35a, 35b, 35c, 35d weist eine Betätigungsstange 45 auf, die an der Koppelstelle 40 mit dem Hubhebel 30a, 30b, 30c, 30d gelenkig verbunden ist. Die Betätigungsstange 45 ist relativ zu einem Gehäuse 46 des Aktuators 35a, 35b, 35c, 35d längsverschiebbar angeordnet, das mit dem Fahrzeugchassis 2 des Flurförderzeugs 1 mittels einer Koppelstelle 47 gelenkig verbunden ist.

Das an dem Hubhebel 30a, 30b, 30c, 30d angeordnete Abstützelement 39 ist in einem an dem Lastaufnahmemittel 3 angeordneten Langloch 48 angeordnet und geführt. In dem Ausführungsbeispiel der Figuren 7 und 8 erstreckt sich das Langloch 48 in Fahrzeuglängsrichtung des Flurförderzeugs 1.

In der Figur 7 befindet sich die Hubvorrichtung 4 in einer abgesenkten Stellung des Lastaufnahmemittels 3. Die Betätigungsstange 45 des Aktuators 35a, 35b, 35c, 35d ist ausgefahren. Der Hubhebel 30a, 30b, 30c, 30d befindet sich in einer liegenden Position, in der das Abstützelement 39 an einem hinteren Ende des Langlochs 48 angeordnet ist und das mittels der Führungseinrichtung 20 geführte Lastaufnahmemittel 3 abgesenkt ist.

In der Figur 8 befindet sich die Hubvorrichtung 4 in einer angehobenen Stellung des Lastaufnahmemittels 3. Durch ein Einfahren der Betätigungsstange 45 des Aktuators 35a, 35b, 35c, 35d wird der Hubhebel 30a, 30b, 30c, 30d um die Schwenkachse S1 bzw. S2 im Gegenuhrzeigersinn verschwenkt - wie in der Figur 8 durch den Pfeil P1 verdeutlicht ist - und somit in Richtung einer stehenden Position verschwenkt, in der das Abstützelement 39 in Richtung zu einem vorderen Ende des Langlochs 48 verschoben wird und das mittels der Führungseinrichtung 20 geführte Lastaufnahmemittel 3 angehoben wird.

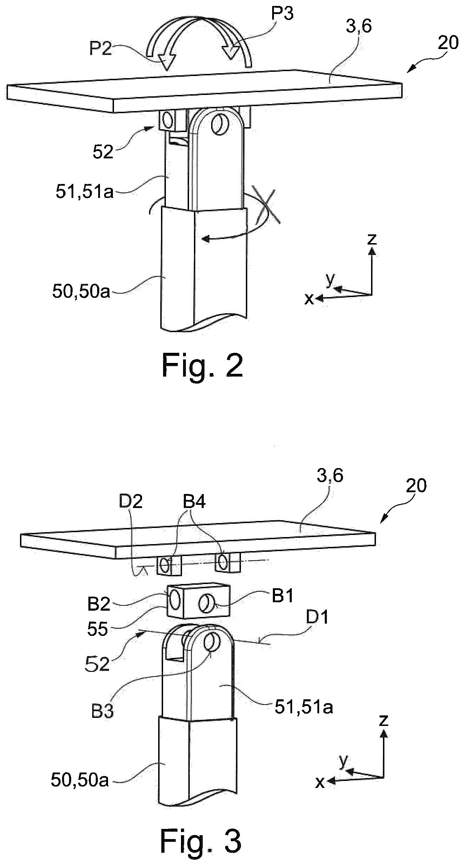

Im Folgenden wird anhand der Figuren 2 bis 6 der Aufbau und die Funktion der Führungseinrichtung 20 des erfindungsgemäßen Flurförderzeugs der Figuren 1 und 13 näher beschrieben.

Die Führungseinrichtung 20 weist eine in Richtung der Fahrzeughochachse z angeordnete Führung 50 auf, die am Fahrzeugchassis 2 starr befestigt ist, und einen an der Führung 50 in Richtung der Fahrzeughochachse z längsverschiebbar und gegen Verdrehen um die Fahrzeughochachse z verdrehgesichert geführten Schlitten 51. Der Schlitten 51 steht mittels eines Ausgleichsgelenks 52 mit dem Lastaufnahmemittel 3 in Wirkverbindung. Das Ausgleichsgelenk 52 ist derart ausgebildet, dass das Lastaufnahmemittel 3 eine Neigebewegung (Pfeil P2 in der Figur 2) des Lastaufnahmemittels 3 um die Fahrzeugquerachse y und eine Neigebewegung (Pfeil P3 in der Figur 2) des Lastaufnahmemittels 3 um die Fahrzeuglängsachse x ausführen kann.

Die Führung 50 ist beispielsweise als Führungsrohr 50a und der Schlitten 51 als an oder in dem Führungsrohr 50a angeordnetes Schieberohr 51a ausgebildet. In dem dargestellten Ausführungsbeispiel ist das Führungsrohr 50a als Vierkantrohr und das Schieberohr 51a als in dem Führungsrohr 50a entlang der Fahrzeughochachse z verschiebbar angeordnetes Vierkantrohr ausgebildet, wobei der Profilquerschnitt des Schieberohrs 51a derart an den Profilquerschnitt des Führungsrohrs 50a angepasst ist, dass das Schieberohr 51a und somit das Lastaufnahmemittel 3 gegen Verdrehen um dem Fahrzeughochachse z in dem Führungsrohr 50a gesichert ist.

Weiterhin ist der Profilquerschnitt des Schieberohrs 51a derart an den Profilquerschnitt des Führungsrohrs 50a angepasst, dass Verschiebebewegungen des Schieberohr 51a und somit des Lastaufnahmemittels 3 in Richtung der Fahrzeugquerachse y und in Richtung der Fahrzeuglängsachse x verhindert werden.

Das zwischen dem Schlitten 51 und dem Lastaufnahmemittel 3 angeordnete Ausgleichsgelenk 52 weist - wie in Verbindung mit der Figur 3 näher dargestellt ist -, ein Gelenkbauteil 55 auf, das an dem Schlitten 51 mittels einer ersten Schwenkachse D1, die in Richtung der Fahrzeugquerachse y verläuft, neigbar angeordnet. Das Lastaufnahmemittel 3 ist an dem Gelenkbauteil 55 mittels einer zweiten Schwenkachse D2, die in Richtung der Fahrzeuglängsachse x verläuft, neigbar angeordnet.

Das Gelenkbauteil 55 ist hierzu beispielsweise mit zwei um 90° versetzt angeordneten Aufnahmebohrungen B1, B2 für nicht näher dargestellte Lagerbolzen versehen, wobei ein erster Lagerbolzen in der Aufnahmebohrung B1 und Aufnahmebohrungen B3 des Schlittens 51 und ein zweiter Lagerbolzen in der Aufnahmebohrung B2 und Aufnahmebohrungen B4 des Lastaufnahmemittels 3 angeordnet ist.

Die aus der Führung 50, dem Schlitten 51 und dem Ausgleichsgelenk 52 bestehende Führungseinrichtung 20 ist somit derart ausgebildet, dass Längsbewegungen des Lastaufnahmemittels 3 entlang der Fahrzeughochachse z und Neigebewegungen des Lastaufnahmemittels 3 um die Fahrzeugquerachse y und um die Fahrzeuglängsachse x ermöglicht werden, jedoch Verdrehbewegung des Lastaufnahmemittels 3 um die Fahrzeughochachse z sowie Verschiebebewegungen des Lastaufnahmemittels 3 in Richtung der Fahrzeugquerachse y und in Richtung der Fahrzeuglängsachse x verhindert werden.

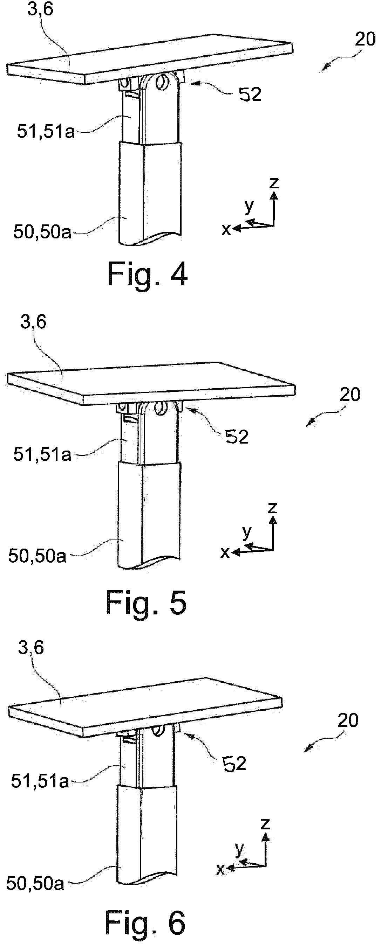

In den Figuren 4 bis 6 sind beispielhaft verschiedene Stellungen des Lastaufnahmemittels 3 gegenüber der Führungseinrichtung 20 dargestellt, die von dem Ausgleichsgelenk 52 ermöglicht werden. In der Figur 4 ist das Lastaufnahmemittel 3 mit einem Neigewinkel von +5⁰ um die Fahrzeugquerachse y nach vorne geneigt, der Neigewinkel des Lastaufnahmemittels 3 um die Fahrzeuglängsachse x beträgt 0⁰. In der Figur 5 ist das Lastaufnahmemittel 3 mit einem Neigewinkel von +5⁰ um die Fahrzeuglängsachse x nach links geneigt, der Neigewinkel des Lastaufnahmemittels 3 um die Fahrzeugquerachse y beträgt 0⁰. In der Figur 6 ist das Lastaufnahmemittel 3 mit einem Neigewinkel von +5⁰ um die Fahrzeugquerachse y nach vorne geneigt und mit einem Neigewinkel von +5⁰ um die Fahrzeuglängsachse x nach links geneigt.

Wie aus den Figuren 1, 13 und 22 ersichtlich ist, ist das Flurförderzeug 1 mit einer elektronischen Steuerungseinrichtung 60 versehen, die ausgebildet ist, die Aktuatoren 35a, 35b, 35c, 35d der Hubvorrichtung 4 einzeln und unabhängig voneinander anzusteuern.

Wie aus den Figuren 1, 13 und 22 ersichtlich ist, ist das Flurförderzeug 1 weiterhin mit einer Sensoreinrichtung 61 versehen, die die Neigung des Flurförderzeugs 1 oder die Neigung des Lastaufnahmemittels 3 erfasst. In den dargestellten Ausführungsbeispielen ist die Sensoreinrichtung 61 an dem Lastaufnahmemittel 3 angeordnet und beispielweise als Zwei-Achs-Neigewinkelsensor ausgebildet, der die Neigung des Lastaufnahmemittels 3 um die Fahrzeuglängsachse x und die Neigung des Lastaufnahmemittels 3 um die Fahrzeugquerachse y erfassen kann.

Die elektronische Steuerungseinrichtung 60 ist hierbei derart ausgebildet, dass die Aktuatoren 35a, 35b, 35c, 35d derart angesteuert werden, dass beim Fahren des Flurförderzeugs 1 auf einer geneigten Rampe das Lastaufnahmemittel 3 in einer horizontalen Ebene angeordnet ist und gehalten wird.

In den Figuren 1, 11 und 12 ist eine derartige erfindungsgemäße Ansteuerung der beiden Aktuatoren 35a, 35b bei einem Flurförderzeug 1 verdeutlicht, bei dem die erste Koppelwelle 36a mit den zwei Hubhebeln 30a, 30b mittels des Aktuators 35a um die Schwenkachse S1 betätigbar ist sowie die zweite Koppelwelle 36b mit den zwei Hubhebeln 30c, 30d mittels des Aktuators 35d um die zweite Schwenkachse S2 betätigbar ist.

In der Figur 1 befindet sich das Flurförderzeug 1 auf einer in einer horizontalen Ebene HE befindlichen Fahrbahn FB und das Lastaufnahmemittel 3 mit einer darauf befindlichen Last L ist durch Ansteuerung der beiden Aktuatoren 35a, 35b parallel zur Fahrbahn FB angehoben. Die beiden Aktuatoren 35a, 35b sind von der Steuereinrichtung 60 derart angesteuert, dass die Hubhebel 30a, 30b und die Hubhebel 30c, 30d denselben Hub des Lastaufnahmemittels 3 erzeugen. In der Figur 1 ist weiterhin ein Lastschwerpunkt LP der auf dem Lastaufnahmemittel 3 befindlichen Last L dargestellt, der sich zentral und vertikal über den Antriebsrädern 10 befindet, um eine optimale Traktion zwischen den Antriebsrädern 10 und der Fahrbahn FB zu erzielen.

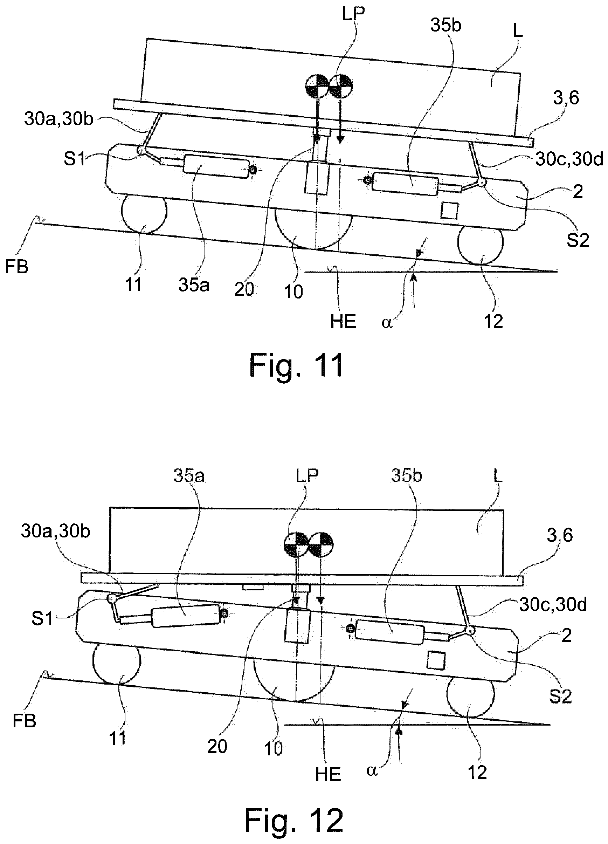

Die Figur 11 zeigt das Flurförderzeug 1 der Figur 1 beim Befahren einer Rampe FB, die gegenüber einer horizontalen Ebene HE um den Winkel α in einer Richtung geneigt ist. In der Figur 11 sind die Aktuatoren 35a, 35b nicht in der erfindungsgemäßen Weise angesteuert und das Lastaufnahmemittel 3 ist parallel zum Fahrzeugchassis 2 und parallel zu der geneigten Rampe FB angehoben. Wie aus der Figur 11 ersichtlich ist, verschiebt sich beim Befahren der geneigten Rampe RP der Lastschwerpunkt LP der auf dem Lastaufnahmemittel 3 befindlichen Last L derart nach in der Figur 11 rechts, dass der Lastschwerpunkt LP nicht mehr zentral und vertikal über den Antriebsrädern 10 angeordnet ist.

Die Figur 12 zeigt das Flurförderzeug 1 der Figur 1 beim Befahren einer Rampe FB, die - analog zur Darstellung der Figur 11 - gegenüber der horizontalen Ebene HE um den Winkel α in einer Richtung geneigt ist. In der Figur 11 sind die Aktuatoren 35a, 35b in der erfindungsgemäßen Weise derart angesteuert, dass beim Fahren des Flurförderzeugs 1 auf der geneigten Rampe FB das Lastaufnahmemittel 3 parallel zu der horizontalen Ebene HE angeordnet und gehalten ist.

Die Steuerungseinrichtung 60 erhält hierbei von der Sensoreinrichtung 61 die Informationen bezüglich der Neigung des Flurförderzeugs 1 bzw. bezüglich der Neigung des Lastaufnahmemittels 3 relativ zu der horizontalen Ebene HE und steuert die beiden Aktuatoren 35a, 35b derart an, dass die Hubhebel 30a, 30b und die Hubhebel 30c, 30d einen unterschiedlichen Hub des Lastaufnahmemittels 3 erzeugen, derart, dass beim Befahren der Rampe FB das Lastaufnahmemittel 3 parallel zu der horizontalen Ebene HE gehalten wird. Durch die dadurch bewirkte Neigung des Lastaufnahmemittels 3 relativ zu dem Fahrzeugchassis 2 des Flurförderzeugs 1 wird erzielt, dass sich der Lastschwerpunkt LP der auf dem Lastaufnahmemittel 3 befindlichen Last L auch beim Befahren der geneigten Rampe FB zentral und vertikal über den Antriebsrädern 10 befindet, so dass das Flurförderzeug 1 auch beim Befahren der geneigten Rampe FB eine optimale Traktion zwischen den Antriebsrädern 10 und der geneigten Rampe FB aufweist. Zudem weist die auf dem Lastaufnahmemittel 3 befindliche Last L, die während des Befahrens der geneigten Rampe FB in der horizontalen Ebene HE gehalten wird, eine verbesserte Stabilität auf.

In den Figuren 13 bis 18 ist eine erfindungsgemäße Ansteuerung der vier Aktuatoren 35a, 35b, 35c, 35d bei einem Flurförderzeug 1 verdeutlicht, bei dem jeder der vier Hubhebel 30a, 30b, 30c, 30d einzeln mittels des entsprechenden Aktuators 35a, 35b, 35c, 35d betätigbar ist.

In der Figur 13 befindet sich das Lastaufnahmemittel 3 mittels der vier Hubhebel 30a, 30b, 30c, 30d in der abgesenkten Stellung.

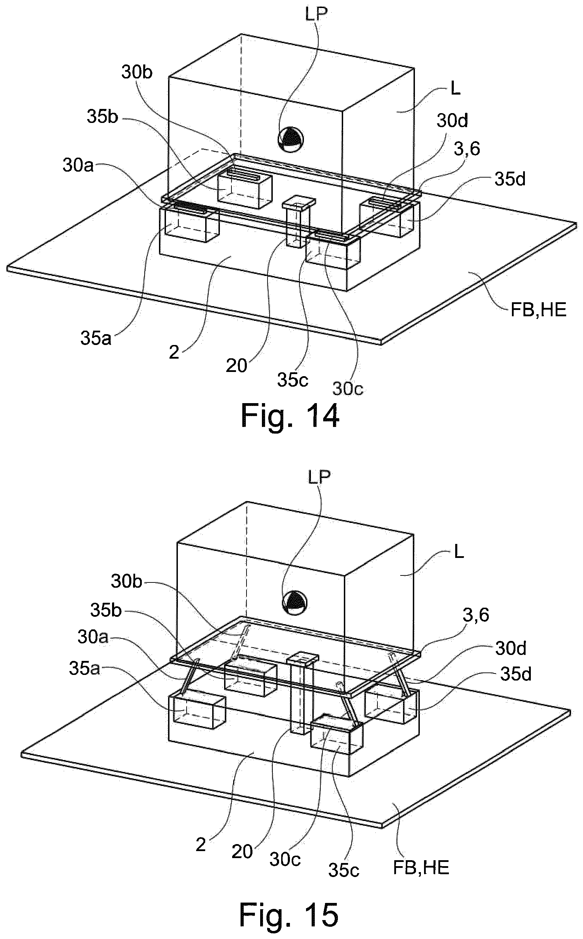

In der Figur 14 befindet sich das Flurförderzeug 1 auf einer in einer horizontalen Ebene HE befindlichen Fahrbahn FB und das Lastaufnahmemittel 3 mit einer darauf befindlichen Last L befindet sich durch entsprechende Ansteuerung der vier Aktuatoren 35a, 35b, 35c, 35d in der abgesenkten Stellung.

In der Figur 15 ist befindet sich das Flurförderzeug 1 auf einer in einer horizontalen Ebene HE befindlichen Fahrbahn FB und das Lastaufnahmemittel 3 ist durch Ansteuerung der vier Aktuatoren 35a, 35b, 35c, 35d parallel zur Fahrbahn FB angehoben. Die vier Aktuatoren 35a, 35b, 35c, 35d sind von der Steuereinrichtung 60 derart angesteuert, dass die vier Hubhebel 30a, 30b, 30c, 30d denselben Hub des Lastaufnahmemittels 3 erzeugen.

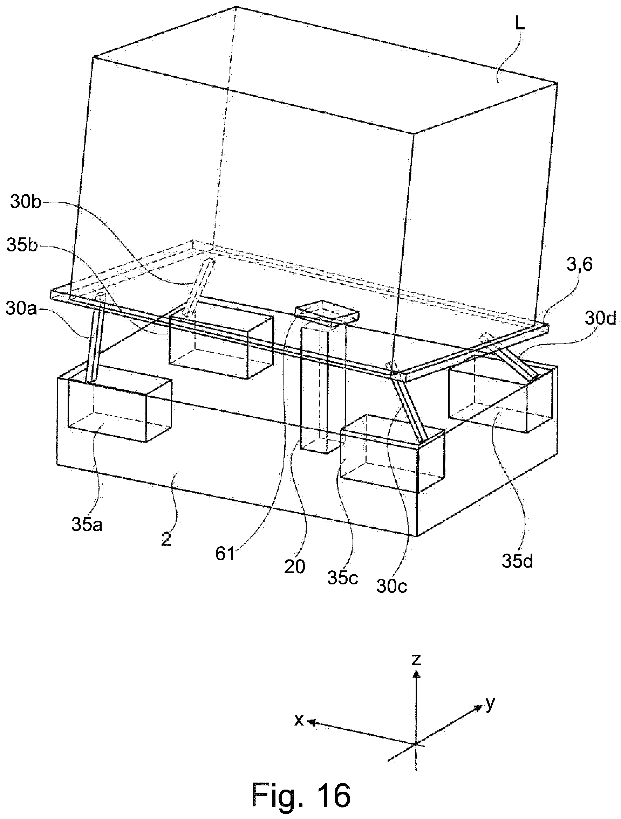

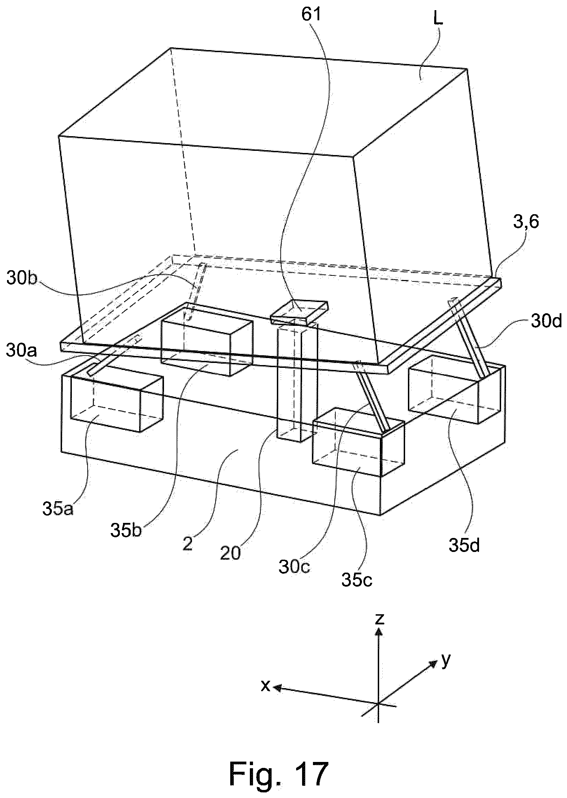

Die Figuren 16 und 17 zeigen Darstellungen, bei denen das Lastaufnahmemittel 3 angehoben ist und jeweils durch eine unterschiedliche Ansteuerung der Aktuatoren 35a, 35b, 35c, 35d, wobei die vier Hubhebel 30a, 30b, 30c, 30d unterschiedliche Hübe aufweisen, das Lastaufnahmemittel 3 in zwei Richtungen geneigt ist. Das Lastaufnahmemittel 3 ist in den Figuren 16 und 17 jeweils um die Fahrzeuglängsachse x und um die Fahrzeugquerachse y geneigt.

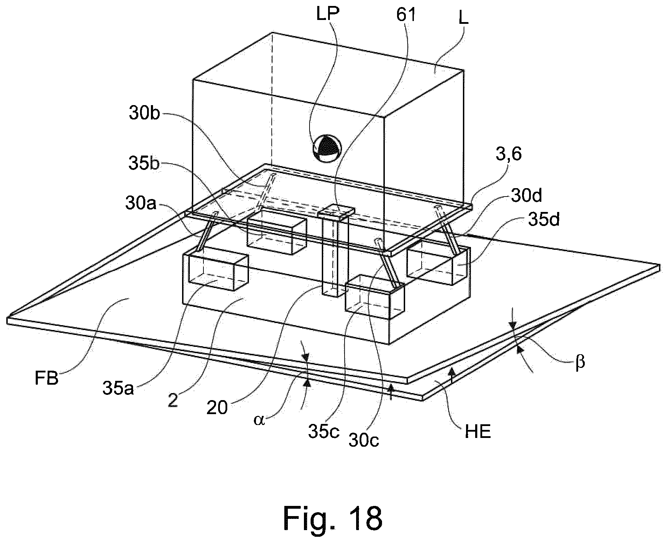

Die Figur 18 zeigt das Flurförderzeug 1 der Figuren 13 bis 17 beim Befahren einer Rampe FB, die gegenüber einer horizontalen Ebene HE um den Winkel α in einer ersten Richtung und um den Winkel β in einer zweiten Richtung geneigt ist. In der Figur 18 sind die Aktuatoren 35a, 35b in der erfindungsgemäßen Weise derart angesteuert, dass beim Fahren des Flurförderzeugs 1 auf der in zwei Richtungen geneigten Rampe FB das Lastaufnahmemittel 3 parallel zu der horizontalen Ebene HE angeordnet und gehalten ist.

Die Steuerungseinrichtung 60 erhält hierbei von der Sensoreinrichtung 61 die Informationen bezüglich der Neigung des Flurförderzeugs 1 bzw. bezüglich der Neigung des Lastaufnahmemittels 3 relativ zu der horizontalen Ebene HE und steuert die vier Aktuatoren 35a, 35b, 35c, 35d derart an, dass die Hubhebel 30a, 30b, 30c, 30d unterschiedliche Hübe des Lastaufnahmemittels 3 erzeugen, derart, dass beim Befahren der in zwei Richtungen geneigten Rampe FB das Lastaufnahmemittel 3 mit der darauf befindlichen Last L parallel zu der horizontalen Ebene HE gehalten wird. Durch die dadurch bewirkte Neigung des Lastaufnahmemittels 3 relativ zu dem Fahrzeugchassis 2 des Flurförderzeugs 1 wird erzielt, dass sich der Lastschwerpunkt LP der auf dem Lastaufnahmemittel 3 befindlichen Last L auch beim Befahren der geneigten Rampe FB zentral und vertikal über den Antriebsrädern 10 befindet, so dass das Flurförderzeug 1 auch beim Befahren der geneigten Rampe FB eine optimale Traktion zwischen den Antriebsrädern 10 und der geneigten Rampe FB aufweist. Zudem weist die auf dem Lastaufnahmemittel 3 befindliche Last L, die während des Befahrens der geneigten Rampe FB in der horizontalen Ebene HE gehalten wird, eine verbesserte Stabilität auf.

Die elektronische Steuerungseinrichtung 60 kann weiterhin derart ausgebildet sein, dass beim Abbremsen des Flurförderzeugs 1 durch Ansteuerung der Aktuatoren 35a, 35b bzw. 35c, 35d das Lastaufnahmemittel 3 um die Fahrzeugquerachse y in eine der Fahrtrichtung F entgegengesetzte Richtung geneigt wird.

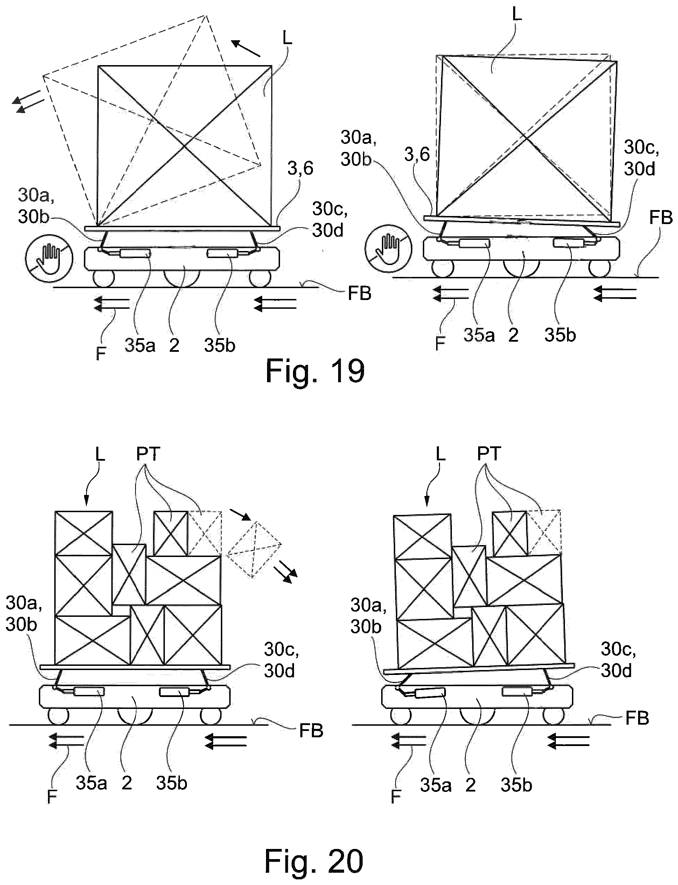

Die Figur 19 zeigt hierzu in der linken Darstellung ein in Fahrtrichtung F fahrendes Flurförderzeug 1 in einer Seitenansicht mit einer auf dem Lastaufnahmemittel 3 befindlichen Last L beim Abbremsen, beispielsweise einer Notabbremsung, ohne die erfinderische Ansteuerung der Aktuatoren 35a, 35b, 35c, 35d, wobei die Last L in Fahrtrichtung F nach vorne von dem Lastaufnahmemittel 3 abkippen bzw. abrutschen kann. Die Figur 19 zeigt in der rechten Darstellung ein in Fahrtrichtung F fahrendes Flurförderzeug 1 in einer Seitenansicht mit einer auf dem Lastaufnahmemittel 3 befindlichen Last L beim Abbremsen, beispielsweise einer Notabbremsung, mit der erfinderischen Ansteuerung der Aktuatoren 35a, 35b bzw. 35c, 35d. Die Aktuatoren 35a, 35b bzw. 35c, 35 werden beim Abbremsen des Flurförderzeugs 1 von der Steuereinrichtung 60 derart angesteuert, dass die in Fahrtrichtung F hinten liegenden Hubhebel 30c, 30d einen geringeren Hub erzeugen als die in Fahrtrichtung F vorne liegenden Hubhebel 30a, 30b, so dass das Lastaufnahmemittel 3 um die Fahrzeugquerachse y nach hinten in eine der Fahrtrichtung F entgegengesetzte Richtung geneigt wird, wodurch als Sicherheitsfunktion ein Abkippen bzw. Abrutschen der Last L in Fahrtrichtung F nach vorne von dem Lastaufnahmemittel 3 beim Abbremsen des Flurförderzeugs 1 verhindert werden kann und somit eine verbesserte Stabilität der Last L bei Abbremsen des Flurförderzeugs 1 erzielt werden kann.

Die elektronische Steuerungseinrichtung 60 kann weiterhin derart ausgebildet sein, dass beim Beschleunigen des Flurförderzeugs 1 durch Ansteuerung der Aktuatoren 35a, 35b bzw. 35c, 35d das Lastaufnahmemittel 3 um die Fahrzeugquerachse y in eine der Fahrtrichtung F zugewandte Richtung geneigt wird.

Die Figur 20 zeigt hierzu in der linken Darstellung ein in Fahrtrichtung F fahrendes Flurförderzeug 1 in einer Seitenansicht mit einer auf dem Lastaufnahmemittel 3 befindlichen Last L, die aus mehreren Packstücken PT besteht, beim Beschleunigen, beispielsweise beim Beschleunigen mit einer hohen Beschleunigung, ohne die erfinderische Ansteuerung der Aktuatoren 35a, 35b bzw. 35c, 35d, wobei ein Packstück PT in Fahrtrichtung F nach hinten von dem Lastaufnahmemittel 3 abkippen bzw. abrutschen kann. Die Figur 20 zeigt in der rechten Darstellung ein in Fahrtrichtung F fahrendes Flurförderzeug 1 in einer Seitenansicht mit einer auf dem Lastaufnahmemittel 3 befindlichen Last L, die aus mehreren Packstücken PT besteht, beim Beschleunigen, beispielsweise beim Beschleunigen mit einer hohen Beschleunigung, mit der erfinderischen Ansteuerung der Aktuatoren 35a, 35b bzw. 35c, 35d. Die Aktuatoren 35a, 35b bzw. 35c, 35 werden beim Beschleunigen des Flurförderzeugs 1 von der Steuereinrichtung 60 derart angesteuert, dass die in Fahrtrichtung F vorne liegenden Hubhebel 30a, 30b einen geringeren Hub erzeugen als die in Fahrtrichtung F hinten liegenden Hubhebel 30c, 30d, so dass das Lastaufnahmemittel 3 um die Fahrzeugquerachse y nach vorne in eine der Fahrtrichtung F zugewandte Richtung geneigt wird, wodurch als Sicherheitsfunktion ein Abkippen bzw. Abrutschen eines Packstücks PT in Fahrtrichtung F nach hinten von dem Lastaufnahmemittel 3 beim Beschleunigen des Flurförderzeugs 1 verhindert werden kann und somit eine verbesserte Stabilität der Last L beim Beschleunigen des Flurförderzeugs 1 erzielt werden kann.

Die elektronische Steuerungseinrichtung 60 kann weiterhin derart ausgebildet sein, dass bei einer Kurvenfahrt KF des Flurförderzeugs 1 durch Ansteuerung der Aktuatoren 35a, 35b bzw. 35c, 35d das Lastaufnahmemittel 3 um die Fahrzeuglängsachse x in Richtung des Kurvenmittelpunktes geneigt wird.

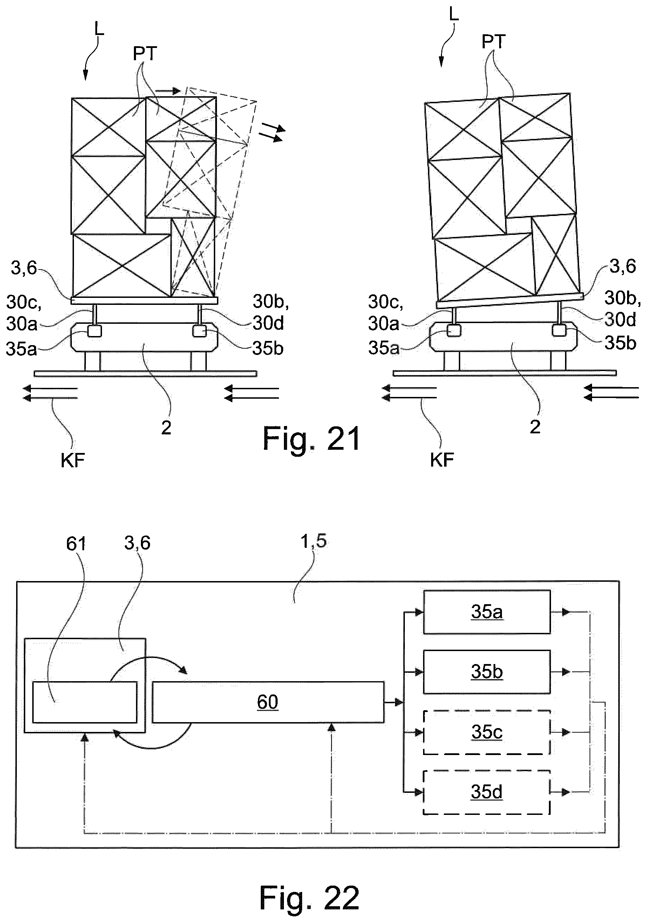

Die Figur 21 zeigt hierzu in der linken Darstellung ein Flurförderzeug 1 in einer Rückansicht mit einer auf dem Lastaufnahmemittel 3 befindlichen Last L, die aus mehreren Packstücken PT besteht, während einer Kurvenfahrt KF nach links ohne die erfinderische Ansteuerung der Aktuatoren 35a, 35b bzw. 35c, 35d, wobei kurvenäußere Packstücke PT nach Außen von dem Lastaufnahmemittel 3 abkippen bzw. abrutschen können. Die Figur 21 zeigt in der rechten Darstellung ein Flurförderzeug 1 in einer Rückansicht mit einer auf dem Lastaufnahmemittel 3 befindlichen Last L, die aus mehreren Packstücken PT besteht, während einer Kurvenfahrt KF nach links mit der erfinderischen Ansteuerung der Aktuatoren 35a, 35b bzw. 35c, 35d. Die Aktuatoren 35a, 35b bzw. 35c, 35d werden bei einer Kurvenfahrt des Flurförderzeugs 1 von der Steuereinrichtung 60 derart angesteuert, dass die kurveninneren Hubhebel 30a, 30c einen geringeren Hub erzeugen als die kurvenäußeren Hubhebel 30b, 30d, so dass das Lastaufnahmemittel 3 um die Fahrzeuglängsachse x nach in der Figur 21 links in Richtung des Kurvenmittelpunktes geneigt wird, wodurch als Sicherheitsfunktion ein Abkippen bzw. Abrutschen der kurvenäußeren Packstücke PT nach Außen von dem Lastaufnahmemittel 3 bei einer Kurvenfahrt KF des Flurförderzeugs 1 verhindert werden kann und somit eine verbesserte Stabilität der Last L während einer Kurvenfahrt des Flurförderzeugs 1 erzielt werden kann.

## Patentansprüche

1. Flurförderzeug (1) mit einem Fahrzeugchassis (2) und einem Lastaufnahmemittel (3), wobei das Lastaufnahmemittel (3) mittels einer Hubvorrichtung (4) relativ zum Fahrzeugchassis (2) anhebbar und absenkbar ist, wobei die Hubvorrichtung (4) ausgebildet ist, eine Hubbewegung des Lastaufnahmemittels (3) in Richtung einer Fahrzeughochachse (z) und eine Neigebewegung des Lastaufnahmemittels (3) um eine Fahrzeugquerachse (y) und/oder um eine Fahrzeuglängsachse (x) zu erzeugen, wobei das Lastaufnahmemittel (3) mittels einer Führungseinrichtung (20) an dem Fahrzeugchassis (2) in Richtung der Fahrzeughochachse (z) verschiebbar angeordnet ist, wobei die Führungseinrichtung (20) ausgebildet ist, Längsbewegungen des Lastaufnahmemittels (3) entlang der Fahrzeughochachse (z) und Neigebewegungen des Lastaufnahmemittels (3) um die Fahrzeugquerachse (y) und/oder um die Fahrzeuglängsachse (x) zu ermöglichen sowie eine Verdrehbewegung des Lastaufnahmemittels (3) um die Fahrzeughochachse (z) sowie Verschiebebewegungen des Lastaufnahmemittels (3) in Richtung der Fahrzeugquerachse (y) und in Richtung der Fahrzeuglängsachse (x) zu verhindern, wobei die Hubvorrichtung (4) vier Hubhebel (30a, 30b, 30c, 30d) aufweist, die in Eckbereichen des Lastaufnahmemittels (3) angeordnet sind, wobei die Hubhebel (30a, 30b, 30c, 30d) jeweils schwenkbar an dem Fahrzeugchassis (2) angeordnet sind und jeweils mittels eines Abstützelements (39) mit dem Lastaufnahmemittel (3) in Wirkverbindung stehen, **dadurch gekennzeichnet, dass** die Führungseinrichtung (20) eine in Richtung der Fahrzeughochachse (z) angeordnete Führung (50), insbesondere ein Führungsrohr (50a), aufweist, die am Fahrzeugchassis (2) befestigt ist, und einen an der Führung (50) längsverschiebbar und verdrehgesichert geführten Schlitten (51), insbesondere ein Schieberohr (51a), aufweist, wobei der Schlitten (51) mittels eines Ausgleichsgelenks (52) mit dem Lastaufnahmemittel (3) in Wirkverbindung steht, wobei das Ausgleichsgelenk (52) ausgebildet ist, die Neigebewegungen des Lastaufnahmemittels (3) um die Fahrzeugquerachse (y) und/oder um die Fahrzeuglängsachse (x) zu ermöglichen.

2. Flurförderzeug nach Anspruch 1, **dadurch gekennzeichnet, dass** zwei Hubhebel (30a, 30b) um eine erste Schwenkachse (S1) und zwei Hubhebel (30c, 30d) um eine zweite Schwenkachse (S2) schwenkbar am Fahrzeugchassis (2) angeordnet sind, wobei die erste Schwenkachse (S1) und die zweite Schwenkachse (S2) parallel zueinander und in Fahrzeuglängsrichtung oder in Fahrzeugquerrichtung beabstandet voneinander angeordnet sind.

3. Flurförderzeug nach Anspruch 1 oder 2, **dadurch gekennzeichnet, dass** die Hubhebel (30a, 30b; 30c, 30d) paarweise mittels eines Aktuators (35a; 35b), insbesondere eines Linearaktuators, betätigbar sind.

4. Flurförderzeug nach Anspruch 3, **dadurch gekennzeichnet, dass** zwei Hubhebel (30a, 30b; 30c, 30d) mittels einer Koppelwelle (36a; 36b) verbunden sind und mittels eines Aktuators (35a; 35b) betätigbar sind, wobei zwei Koppelwellen (36a, 36b) vorgesehen sind, die jeweils zwei Hubhebel (30a, 30b; 30c, 30d) aufweisen und jeweils mittels eines Aktuators (35a; 35b) betätigbar sind.

5. Flurförderzeug nach Anspruch 4, **dadurch gekennzeichnet, dass** die erste Koppelwelle (36a) um die erste Schwenkachse (S1) und die zweite Koppelwelle (36b) um die zweite Schwenkachse (S2) am Fahrzeugchassis (2) verschwenkbar angeordnet sind.

6. Flurförderzeug nach einem der Ansprüche 3 bis 5, **dadurch gekennzeichnet, dass** die Hubhebel (30a, 30b, 30c, 30d) jeweils mittels eines als Zylinderrolle (38) ausgebildeten Abstützelements (39) mit dem Lastaufnahmemittel (3) in Wirkverbindung stehen.

7. Flurförderzeug nach Anspruch 1 oder 2, **dadurch gekennzeichnet, dass** jeder Hubhebel (30a, 30b, 30c, 30d) mittels eines Aktuators (35a, 35b, 35c, 35d), insbesondere eines Linearaktuators, betätigbar ist.

8. Flurförderzeug nach Anspruch 7, **dadurch gekennzeichnet, dass** die Hubhebel (30a, 30b, 30c, 30d) jeweils mittels eines als Kugelrolle (41) ausgebildeten Abstützelements (39) mit dem Lastaufnahmemittel (3) in Wirkverbindung stehen.

9. Flurförderzeug nach einem der Ansprüche 1 bis 8, **dadurch gekennzeichnet, dass** jedes Abstützelement (39) in einer langlochartigen Ausnehmung (48) des Lastaufnahmemittels (3) geführt ist.

10. Flurförderzeug nach einem der Ansprüche 1 bis 9, **dadurch gekennzeichnet, dass** das Ausgleichsgelenk (52) als Kugelgelenk ausgebildet ist.

11. Flurförderzeug nach einem der Ansprüche 1 bis 9, **dadurch gekennzeichnet, dass** das Ausgleichsgelenk (52) ein Gelenkbauteil (55) umfasst, das an dem Schlitten (51) um die Fahrzeugquerachse (y) neigbar angeordnet ist, und das Lastaufnahmemittel (3) an dem Gelenkbauteil (5) um die Fahrzeuglängsachse (x) neigbar angeordnet ist.

12. Flurförderzeug nach einem der Ansprüche 1 bis 11, **dadurch gekennzeichnet, dass** eine elektronische Steuerungseinrichtung (60) vorgesehen ist, die ausgebildet ist, die Aktuatoren (35a, 35b; 35c, 35d) anzusteuern.

13. Flurförderzeug nach Anspruch 12, **dadurch gekennzeichnet, dass** die elektronische Steuerungseinrichtung (60) mit einer die Neigung des Flurförderzeugs (1) oder die Neigung des Lastaufnahmemittels (3) erfassenden Sensoreinrichtung (61) in Verbindung steht und die elektronische Steuerungseinrichtung (60) ausgebildet ist, die Aktuatoren (35a, 35b; 35c, 35d) derart anzusteuern, dass beim Fahren des Flurförderzeugs (1) auf einer geneigten Rampe (FB) das Lastaufnahmemittel (3) in einer horizontalen Ebene (HE) angeordnet ist.

14. Flurförderzeug nach Anspruch 12 oder 13, **dadurch gekennzeichnet, dass** die elektronische Steuerungseinrichtung (60) derart ausgebildet ist, dass beim Abbremsen des Flurförderzeugs (1) durch Ansteuerung der Aktuatoren (35a, 35b; 35c, 35d) das Lastaufnahmemittel um die Fahrzeugquerachse (y) in eine der Fahrtrichtung (F) entgegengesetzte Richtung geneigt wird.

15. Flurförderzeug nach einem der Ansprüche 12 bis 14, **dadurch gekennzeichnet, dass** die elektronische Steuerungseinrichtung (60) derart ausgebildet ist, dass beim Beschleunigen des Flurförderzeugs (1) durch Ansteuerung der Aktuatoren (35a, 35b; 35c, 35d) das Lastaufnahmemittel (3) um die Fahrzeugquerachse (y) in eine der Fahrtrichtung (F) zugewandte Richtung geneigt wird.

16. Flurförderzeug nach einem der Ansprüche 12 bis 15, **dadurch gekennzeichnet, dass** die elektronische Steuerungseinrichtung (60) derart ausgebildet ist, dass bei einer Kurvenfahrt (KF) des Flurförderzeugs (1) durch Ansteuerung der Aktuatoren (35a, 35b; 35c, 35d) das Lastaufnahmemittel (3) um die Fahrzeuglängsachse (x) in Richtung des Kurvenmittelpunktes geneigt wird.

17. Flurförderzeug nach einem der Ansprüche 1 bis 16, **dadurch gekennzeichnet, dass** das Flurförderzeug (1) als automatisiertes oder autonomes Transportfahrzeug (5) mit einem als Lastaufnahmeplattform (6) ausgebildeten Lastaufnahmemittel (3) ausgebildet ist.

18. Flurförderzeug nach einem der Ansprüche 1 bis 17, **dadurch gekennzeichnet, dass** das Flurförderzeug (1) als Hubwagen ausgebildet ist, wobei das Lastaufnahmemittel von zwei an Radarmen angeordneten Hubplatten gebildet ist.

## Claims

1. Industrial truck (1) having a vehicle chassis (2) and having a load-carrying means (3), wherein the load-carrying means (3) is raisable and lowerable relative to the vehicle chassis (2) by means of a lifting apparatus (4), wherein the lifting apparatus (4) is configured to produce a lifting movement of the load-carrying means (3) in the direction of a vehicle vertical axis (z) and a tilting movement of the load-carrying means (3) about a vehicle transverse axis (y) and/or about a vehicle longitudinal axis (x), wherein the load-carrying means (3) is, by means of a guiding device (20), arranged on the vehicle chassis (2) displaceably in the direction of the vehicle vertical axis (z), wherein the guiding device (20) is configured to allow longitudinal movements of the load-carrying means (3) along the vehicle vertical axis (z) and tilting movements of the load-carrying means (3) about the vehicle transverse axis (y) and/or about the vehicle longitudinal axis (x), and also to prevent a rotational movement of the load-carrying means (3) about the vehicle vertical axis (z) and displacement movements of the load-carrying means (3) in the direction of the vehicle transverse axis (y) and in the direction of the vehicle longitudinal axis (x), wherein the lifting apparatus (4) has four lifting levers (30a, 30b, 30c, 30d) which are arranged in corner regions of the load-carrying means (3), wherein the lifting levers (30a, 30b, 30c, 30d) are each arranged pivotably on the vehicle chassis (2) and are each in operative connection with the load-carrying means (3) by means of a supporting element (39), **characterized in that** the guiding device (20) has a guide (50), in particular a guide tube (50a), arranged in the direction of the vehicle vertical axis (z) and fastened to the vehicle chassis (2), and has a carriage (51), in particular a sliding tube (51a), guided longitudinally displaceably on the guide (50) so as to be secured against rotation, wherein the carriage (51) is in operative connection with the load-carrying means (3) by means of a compensating joint (52), wherein the compensating joint (52) is configured to allow the tilting movements of the load-carrying means (3) about the vehicle transverse axis (y) and/or about the vehicle longitudinal axis (x).

2. Industrial truck according to Claim 1, **characterized in that**, on the vehicle chassis (2), two lifting levers (30a, 30b) are arranged pivotably about a first pivot axis (S1) and two lifting levers (30c, 30d) are arranged pivotably about a second pivot axis (S2), wherein the first pivot axis (S1) and the second pivot axis (S2) are arranged parallel to one another and spaced apart from one another in the vehicle longitudinal direction or in the vehicle transverse direction.

3. Industrial truck according to Claim 1 or 2, **characterized in that** the lifting levers (30a, 30b; 30c, 30d) are actuatable by means of an actuator (35a; 35b), in particular a linear actuator, in pairs.

4. Industrial truck according to Claim 3, **characterized in that** two lifting levers (30a, 30b; 30c, 30d) are connected by means of a coupling shaft (36a; 36b) and are actuatable by means of an actuator (35a; 35b), wherein provision is made of two coupling shafts (36a, 36b) which each have two lifting levers (30a, 30b; 30c, 30d) and are each actuatable by means of an actuator (35a; 35b).

5. Industrial truck according to Claim 4, **characterized in that** the first coupling shaft (36a) is arranged pivotably about the first pivot axis (S1), and the second coupling shaft (36b) is arranged pivotably about the second pivot axis (S2), at the vehicle chassis (2).

6. Industrial truck according to one of Claims 3 to 5, **characterized in that** the lifting levers (30a, 30b, 30c, 30d) are each in operative connection with the load-carrying means (3) by means of a supporting element (39) which is in the form of a cylindrical roller (38).

7. Industrial truck according to Claim 1 or 2, **characterized in that** each lifting lever (30a, 30b, 30c, 30d) is actuatable by means of an actuator (35a, 35b, 35c, 35d), in particular a linear actuator.

8. Industrial truck according to Claim 7, **characterized in that** the lifting levers (30a, 30b, 30c, 30d) are each in operative connection with the load-carrying means (3) by means of a supporting element (39) which is in the form of a spherical roller (41).

9. Industrial truck according to one of Claims 1 to 8, **characterized in that** each supporting element (39) is guided in a slot-like recess (48) of the load-carrying means (3).

10. Industrial truck according to one of Claims 1 to 9, **characterized in that** the compensating joint (52) is in the form of a ball joint.

11. Industrial truck according to one of Claims 1 to 9, **characterized in that** the compensating joint (52) comprises a joint component (55) which is arranged on the carriage (51) tiltably about the vehicle transverse axis (y), and the load-carrying means (3) is arranged on the joint component (5) tiltably about the vehicle longitudinal axis (x).

12. Industrial truck according to one of Claims 1 to 11, **characterized in that** provision is made of an electronic control device (60) which is configured to control the actuators (35a, 35b; 35c, 35d).

13. Industrial truck according to Claim 12, **characterized in that** the electronic control device (60) is connected to a sensor device (61) which detects the inclination of the industrial truck (1) or the inclination of the load-carrying means (3), and the electronic control device (60) is configured to control the actuators (35a, 35b; 35c, 35d) in such a way that, if the industrial truck (1) is being driven on an inclined ramp (FB), the load-carrying means (3) is arranged in a horizontal plane (HE).

14. Industrial truck according to Claim 12 or 13, **characterized in that** the electronic control device (60) is designed in such a way that, during braking of the industrial truck (1), the load-carrying means is tilted about the vehicle transverse axis (y) in a direction opposite the direction of travel (F) by control of the actuators (35a, 35b; 35c, 35d).

15. Industrial truck according to one of Claims 12 to 14, **characterized in that** the electronic control device (60) is designed in such a way that, during acceleration of the industrial truck (1), the load-carrying means (3) is tilted about the vehicle transverse axis (y) in a direction directed towards the direction of travel (F) by control of the actuators (35a, 35b; 35c, 35d).

16. Industrial truck according to one of Claims 12 to 15, **characterized in that** the electronic control device (60) is designed in such a way that, during a turning manoeuvre (KF) of the industrial truck (1), the load-carrying means (3) is tilted about the vehicle longitudinal axis (x) in the direction of the centre of the turn by control of the actuators (35a, 35b; 35c, 35d).

17. Industrial truck according to one of Claims 1 to 16, **characterized in that** the industrial truck (1) is designed as an automated or autonomous transport vehicle (5) having a load-carrying means (3) in the form of a load-carrying platform (6).

18. Industrial truck according to one of Claims 1 to 17, **characterized in that** the industrial truck (1) is designed as a lifting truck, wherein the load-carrying means is formed by two lifting plates which are arranged on wheel arms.

## Revendications

1. Chariot de manutention (1) comprenant un châssis de véhicule (2) et un moyen de réception de charge (3), le moyen de réception de charge (3) pouvant être soulevé et abaissé par rapport au châssis de véhicule (2) au moyen d'un dispositif de levage (4), le dispositif de levage (4) étant configuré pour produire un mouvement de levage du moyen de réception de charge (3) dans la direction d'un axe vertical de véhicule (z) et un mouvement d'inclinaison du moyen de réception de charge (3) autour d'un axe transversal de véhicule (y) et/ou autour d'un axe longitudinal de véhicule (x), le moyen de réception de charge (3) étant disposé sur le châssis de véhicule (2) de manière à pouvoir coulisser dans la direction de l'axe vertical de véhicule (z) au moyen d'un dispositif de guidage (20), le dispositif de guidage (20) étant configuré pour rendre possible des mouvements longitudinaux du moyen de réception de charge (3) le long de l'axe vertical de véhicule (z) et des mouvements d'inclinaison du moyen de réception de charge (3) autour de l'axe transversal de véhicule (y) et/ou autour de l'axe longitudinal de véhicule (x), ainsi qu'à empêcher un mouvement de rotation du moyen de réception de charge (3) autour de l'axe vertical de véhicule (z) ainsi que des mouvements de coulissement du moyen de réception de charge (3) dans la direction de l'axe transversal de véhicule (y) et dans la direction de l'axe longitudinal de véhicule (x), le dispositif de levage (4) possédant quatre leviers de levage (30a, 30b, 30c, 30d) qui sont disposés dans des zones de coin du moyen de réception de charge (3), les leviers de levage (30a, 30b, 30c, 30d) étant respectivement montés pivotants sur le châssis de véhicule (2) et se trouvant respectivement en liaison fonctionnelle avec le moyen de réception de charge (3) au moyen d'un élément d'appui (39), **caractérisé en ce que** le dispositif de guidage (20) possède un élément de guidage (50), en particulier un tube coulissant (50a), disposé dans la direction de l'axe vertical de véhicule (z), lequel est fixé au châssis de véhicule (2), ainsi qu'un chariot (51), en particulier un tube coulissant (51a), guidé sur l'élément de guidage (50) de manière à pouvoir coulisser longitudinalement et à être bloqué en rotation, le chariot (51) se trouvant en liaison fonctionnelle avec le moyen de réception de charge (3) au moyen d'une articulation de compensation (52), l'articulation de compensation (52) étant configurée pour rendre possible les mouvements d'inclinaison du moyen de réception de charge (3) autour de l'axe transversal de véhicule (y) et/ou autour de l'axe longitudinal de véhicule (x).

2. Chariot de manutention selon la revendication 1, **caractérisé en ce que** deux leviers de levage (30a, 30b) sont montés sur le châssis de véhicule (2) de manière à pouvoir pivoter autour d'un premier axe de pivotement (S1) et deux leviers de levage (30c, 30d) de manière à pouvoir pivoter autour d'un deuxième axe de pivotement (S2), le premier axe de pivotement (S1) et le deuxième axe de pivotement (S2) étant parallèles l'un à l'autre et espacés l'un de l'autre dans le sens longitudinal de véhicule ou dans le sens transversal de véhicule.

3. Chariot de manutention selon la revendication 1 ou 2, **caractérisé en ce que** les leviers de levage (30a, 30b ; 30c, 30d) peuvent être actionnés par paires au moyen d'un actionneur (35a ; 35b), en particulier d'un actionneur linéaire.

4. Chariot de manutention selon la revendication 3, **caractérisé en ce que** deux leviers de levage (30a, 30b ; 30c, 30d) sont reliés au moyen d'un arbre d'accouplement (36a ; 36b) et peuvent être actionnés au moyen d'un actionneur (35a ; 35b), deux arbres d'accouplement (36a, 36b) étant prévus, lesquels possèdent respectivement deux leviers de levage (30a, 30b ; 30c, 30d) et peuvent respectivement être actionnés au moyen d'un actionneur (35a ; 35b).

5. Chariot de manutention selon la revendication 4, **caractérisé en ce que** le premier arbre d'accouplement (36a) est monté sur le châssis de véhicule (2) de manière à pouvoir pivoter autour du premier axe de pivotement (S1) et le deuxième arbre d'accouplement (36b) de manière à pouvoir pivoter autour du deuxième axe de pivotement (S2).

6. Chariot de manutention selon l'une des revendications 3 à 5, **caractérisé en ce que** les leviers de levage (30a, 30b, 30c, 30d) se trouvent en liaison fonctionnelle avec le moyen de réception de charge (3) respectivement au moyen d'un élément d'appui (39) réalisé sous la forme d'un galet cylindrique (38).

7. Chariot de manutention selon la revendication 1 ou 2, **caractérisé en ce que** chaque levier de levage (30a, 30b, 30c, 30d) peut être actionné au moyen d'un actionneur (35a, 35b, 35c, 35d), en particulier d'un actionneur linéaire.

8. Chariot de manutention selon la revendication 7, **caractérisé en ce que** les leviers de levage (30a, 30b, 30c, 30d) se trouvent en liaison fonctionnelle avec le moyen de réception de charge (3) respectivement au moyen d'un élément d'appui (39) réalisé sous la forme d'un galet à billes (41).

9. Chariot de manutention selon l'une des revendications 1 à 8, **caractérisé en ce que** chaque élément d'appui (39) est guidé dans un évidement (48) en forme de trou oblong du moyen de réception de charge (3).

10. Chariot de manutention selon l'une des revendications 1 à 9, **caractérisé en ce que** l'articulation de compensation (52) est réalisée sous la forme d'une rotule.

11. Chariot de manutention selon l'une des revendications 1 à 9, **caractérisé en ce que** l'articulation de compensation (52) comprend un composant d'articulation (55) qui est disposé sur le chariot (51) de manière à pouvoir s'incliner autour de l'axe transversal de véhicule (y) et le moyen de réception de charge (3) est disposé sur le composant d'articulation (5) de manière à pouvoir s'incliner autour de l'axe longitudinal de véhicule (x).

12. Chariot de manutention selon l'une des revendications 1 à 11, **caractérisé en ce qu'**un dispositif de commande électronique (60) est prévu, lequel est configuré pour commander les actionneurs (35a, 35b ; 35c, 35d).

13. Chariot de manutention selon la revendication 12, **caractérisé en ce que** le dispositif de commande électronique (60) est en liaison avec un dispositif de détection (61) qui détecte l'inclinaison du chariot de manutention (1) ou l'inclinaison du moyen de réception de charge (3) et le dispositif de commande électronique (60) est configuré pour commander les actionneurs (35a, 35b ; 35c, 35d) de telle sorte que, lorsque le chariot de manutention (1) se déplace sur une rampe inclinée (FB), le moyen de réception de charge (3) est disposé dans un plan horizontal (HE).

14. Chariot de manutention selon la revendication 12 ou 13, **caractérisé en ce que** le dispositif de commande électronique (60) est configuré de telle sorte que, lors du freinage du chariot de manutention (1) par commande des actionneurs (35a, 35b ; 35c, 35d), le moyen de réception de charge est incliné autour de l'axe transversal de véhicule (y) dans une direction opposée à la direction de déplacement (F).

15. Chariot de manutention selon l'une des revendications 12 à 14, **caractérisé en ce que** le dispositif de commande électronique (60) est configuré de telle sorte que, lors de l'accélération du chariot de manutention (1) par commande des actionneurs (35a, 35b ; 35c, 35d), le moyen de réception de charge (3) est incliné autour de l'axe transversal de véhicule (y) dans une direction orientée dans la direction de déplacement (F).

16. Chariot de manutention selon l'une des revendications 12 à 15, **caractérisé en ce que** le dispositif de commande électronique (60) est configuré de telle sorte que, lors d'un virage (KF) du chariot de manutention (1) par commande des actionneurs (35a, 35b ; 35c, 35d), le moyen de réception de charge (3) est incliné autour de l'axe longitudinal de véhicule (x) en direction du centre de la courbe du virage.

17. Chariot de manutention selon l'une des revendications 1 à 16, **caractérisé en ce que** le chariot de manutention (1) est réalisé sous la forme d'un véhicule de transport (5) automatisé ou autonome avec un moyen de réception de charge (3) réalisé sous la forme d'une plate-forme de réception de charge (6).

18. Chariot de manutention selon l'une des revendications 1 à 17, **caractérisé en ce que** le chariot de manutention (1) est réalisé sous la forme d'un chariot élévateur, le moyen de réception de charge étant formé par deux plaques de levage disposées sur des bras à roues.
